# EUROPÄISCHE PATENTSCHRIFT

(11) **EP 0 861 626 B1**
(45) Veröffentlichungstag und Bekanntmachung des Hinweises auf die Patenterteilung: **07.06.2000**
(21) Anmeldenummer: 98105617.9
(22) Anmeldetag: 28.04.1995
(51) Int. Cl.: A47J 43/00

(54) **Küchenmaschine**
Food processor
Robot de cuisine

(30) Priorität: 28.04.1994 DE 4414822
(43) Veröffentlichungstag der Anmeldung: 02.09.1998
(62) Teilanmeldung aus: 95919991.0
(73) Patentinhaber: Vorwerk & Co. Interholding GmbH, 42275 Wuppertal (DE)
(72) Erfinder: Dörner, Stefan, 42719 Solingen (DE); Kemker, Uwe, 42105 Wuppertal (DE)
(74) Vertreter: Müller, Enno, Dipl.-Ing.

(56) Entgegenhaltungen:
- AT-B- 364 479
- DE-A- 3 335 139
- DE-A- 3 408 692
- DE-A- 3 507 276
- DE-A- 3 640 078

## Beschreibung

Die Erfindung betrifft eine Küchenmaschine, mit einem Rührgefäß und einem Antrieb für ein Rührwerk in dem Rührgefäß, wobei das Rührgefäß in seinem unteren Bereich einen im wesentlichen kreisförmigen Öffnungsquerschnitt aufweist.

Eine solche Küchenmaschine ist bspw. aus der DE-A-35 07 276 bekannt. Man bezeichnet diese Küchenmaschine auch als Thermomixer. Der untere Bereich des Rührgefäßes ist mittels einer in einer in der Küchenmaschine ausgebildeten Rührgefäßaufnahme, in welche das Rührgefäß einsetzbar ist, integrierte Heizung aufheizbar. Es können so nicht nur Speisen durch Mixen bzw. Zermahlen zubereitet werden, sondern es ist möglich, zusätzlich eine Garbehandlung durchzuführen.

Bei einer Küchenmaschine, wie sie eingangs als bekannt vorausgesetzt worden ist, besteht neben dem Bedürfnis, in dem Rührgefäß eine vergleichbar große Menge aufnehmen zu können, auch das Bestreben, das Rührgefäß möglichst so auszubilden, daß es zu einer guten Durchmischung des gerührten oder gemixten bzw. zermahlenen Rührgutes in dem Rührgefäß kommt. Es ist in diesem Zusammenhang bereits bekannt, daß das Rührgefäß sich nach oben erweitert. Auch sind bei derartigen Gefäßen bereits mehrere Verwirbelungsrippen am Umfang ausgebildet worden.

Der Erfindung liegt die Aufgabe zugrunde, eine Küchenmaschine, wie sie eingangs beschrieben ist, gebrauchsgünstiger auszubilden.

Diese Aufgabe ist beim Gegenstand des Anspruches 1 gelöst.

Durch eine Formänderung des Innenraumes des Rührgefäßes über die Höhe des Rührgefäßes wird eine gute Durchmischung des Mixgutes bzw. Rührgutes erreicht. Es bilden sich Zonen stärkerer und geringerer Bewegung des Rührgutes aus. Üblicherweise besitzt ein solches Rührgefäß an einer Seite einen Halterungsgriff. Es ist hierbei bevorzugt, daß der Mittelpunkt des oberen öffnungsquerschnittes von dem Halterungsgriff weiter entfernt ist als der Mittelpunkt des unteren Öffnungsquerschnittes. Dies bedeutet, daß der Öffnungsbereich des Rührgefäßes eine gewisse Ausladung aufweist in einer Richtung, welche durch eine Achse durch den Mittelpunkt der Öffnungsquerschnitte und den Handgriff vorgegeben ist, wobei diese Ausladung sich von dem Handgriff weg erstreckt. Weiter ist auch bevorzugt, daß drei unterschiedliche Bereiche über eine Höhe des Rührgefäßes an diesem zu unterscheiden sind. Zunächst ein unterer, im wesentlichen zylindrischer Bereich, an welchen ein mittlerer Bereich mit im wesentlichen konischen Seitenflächen anschließt, und ein oberer Bereich, dessen Öffnungsquerschnitt ellipsenartig ist. Der zylindrische Bereich kann jedoch auch gering konisch ausgebildet sein, bspw. in einem Winkel von ca. 1,6°. Hierbei kann der Übergang von dem kreisförmigen in dem ellipsenartigen Öffnungsquerschnitt bereits in dem mittleren Bereich ansetzen. Im einzelnen kann die Geometrie des Rührgefäßes hierbei auch so beschaffen sein, daß eine Wandung des Rührgefäßes in einem Vertikalschnitt in Versetzungsrichtung des Mittelpunktes des Querschnittes gekrümmt verläuft, auf der gegenüberliegenden Seite, der Handgriffseite, jedoch gerade, - wenn auch sich nach oben erweiternd. Zwar ist die beschriebene Geometrie der Innenfläche des Rührgefäßes schon für sich vorteilhaft im Hinblick auf die angestrebte gute Durchmischung des Rührgutes. Zur weiteren Verbesserung ist jedoch vorgesehen, daß eine Innenwandfläche des Rührgefäßes in einem horizontalen Querschnitt eine nach innen vorspringende Stufe ausbildet. Diese Stufe kann insbesondere anderseitig flach auslaufend in die Wandung des Rührgefäßes übergehen. An der steilen Seite der Stufe kann im einzelnen noch ein einer Abfaserung entsprechender Übergang ausgebildet sein. Diese Stufe ist bevorzugt in dem mittleren und oberen Bereich des Rührgefäßes vorgesehen. Insgesamt hat die Stufe damit eine sich über eine oder zwei Bereiche des Rührgefäßes erstreckende keilartige Struktur. Diese Stufe ist auch weiter bevorzugt nur einseitig in dem Rührgefäß ausgebildet. Insoweit ist das Rührgefäß also unsymmetrisch gestaltet. Üblicherweise ist ein derartiges Rührgefäß auch mit einem Rührgefäßdeckel versehen. Weiter ist in der Küchenmaschine eine Rührgefäßaufnahme für das Rührgefäß ausgebildet. Bei der hier beschriebenen Küchenmaschine wird der untere, bevorzugt auch im wesentlichen zylindrische Bereich des Rührgefäßes in die Rührgefäßaufnahme eingesetzt.

Die Erfindung schlägt nun in diesem Zusammenhang vor, daß an dem Handgriff des Rührgefäßes eine Drehsicherung ausgebildet ist, welche zugleich eine Sicherung des Rührgefäßes in der Rührgefäßaufnahme und des Rührgefäßdeckels auf dem Rührgefäß ermöglicht.

Die Sicherungseinrichtung ist im einzelnen so ausgebildet, daß sie nur bei aufgesetztem Rührgefäßdeckel betätigbar ist. Hierzu kann vorgesehen sein, daß eine Kupplungsstange einen Verriegelungsvorsprung aufweist, welcher zur Drehblockierung/-freigabe mit einer Verriegelungskulisse zusammenwirkt. Bei nicht aufgesetztem Rührgefäßdeckel wirkt der Verriegelungsvorsprung derart mit der Verriegelungskulisse zusammen, daß eine Drehblockierung der Kupplungsstange vorliegt. Wird hingegen der Rührgefäßdeckel aufgesetzt, so bewirkt dies eine Freigabe des Verriegelungsvorsprunges und einer damit einhergehenden Drehfreigabe der Kupplungsstange. In diesem Zusammenhang wird weiterhin vorgeschlagen, daß die Verriegelungskulisse schwenkbeweglich gelagert ist. Durch Aufsetzen des Rührgefäßdeckels wird hierbei die Verriegelungskulisse von dem Verriegelungsvorsprung abgeschwenkt, so daß letzterer freigegeben wird. Hiernach kann eine Verdrehung der Kupplungsstange erfolgen. Es wird vorgeschlagen, daß die Verriegelungskulisse durch einen an dem Rührgefäßdeckel ausgebildeten Betätigungsvorsprung in eine Freigabestellung verlagerbar ist. Dieser Betätigungsvorsprung kann ein über die Unterseite des Rührgefäßdeckels hinausragender Stift sein. Bevorzugt wird hierbei eine Anordnung, bei welcher zwei Stifte bzw. Betätigungsnocken vorgesehen sind. Diese durchtreten bei einem Aufsetzen des Rührgefäßdeckels entsprechende Bohrungen der Handhabe und beaufschlagen die Verriegelungskulisse derart, daß diese in eine den Verriegelungsvorsprung freigebende Stellung verschwenkt. Weiterhin kann hierbei vorgesehen sein, daß die Verriegelungskulisse federabgestützt ist, wobei die Feder in eine Drehblockierungsrichtung zu dem Verriegelungsvorsprung wirkt, so daß diese Stellung -bedingt durch die Federautomatisch nach Abheben des Rührgefäßdeckels erzielt wird. In einer bevorzugten Ausgestaltung kann vorgesehen sein, daß die Verriegelungskulisse eine Blockierungstasche aufweist, in welche in der Verriegelungsstellung der Verriegelungsvorsprung eingefahren ist. Weiter kann die Sicherungseinrichtung bspw. dadurch betätigt werden, daß durch ein Aufsetzen des Rührgefäßdekkels ein Herunterdrücken eines Sicherungsstiftes in eine Dreh-Freigabestellung erfolgt. Der Sicherungsstift kann weiter im einzelnen in einer als Kupplungsstange ausgebildeten Hülse geführt sein, welche eine Öffnung für einen Sicherungsfortsatz des Sicherungsstiftes aufweist. Hierdurch kann sich der Sicherungsstift relativ zu der Hülse vertikal bewegen. Eine vertikale Bewegbarkeit der Hülse ist nicht erforderlich. Nach einem Herunterdrücken des Sicherungsstiftes kann bspw. die Ausgestaltung im einzelnen so getroffen sein, daß der Sicherungsfortsatz in eine Nut hineingedrückt wird, in welcher er eine Verdrehbewegung durchführen kann bzw. eine Verdrehbewegung des Sicherungsstiftes mit vollziehen kann. Alternativ kann die Ausbildung auch so getroffen sein, daß durch ein Herunterdrücken des Sicherungsfortsatzes dieser aus der den Sicherungsfortsatz verriegelnden Nut herausbewegt wird. Hiernach ist der Sicherungsfortsatz und somit auch der Sicherungsstift verdrehbar. Die Hülse kann weiter mit der Handhabe der Sicherungseinrichtung, die bspw. hinsichtlich ihrer Betätigungseinrichtung hebelartig ausgebildet sein kann, verbunden sein. Wesentlich ist auch, daß die Hülse bzw. die Kupplungsstange und der Sicherungsstift sich außerhalb des Rührgefäßes befinden, nämlich bevorzugt integriert ausgebildet sind in eine äußere Handhabe des Rührgefäßes. Weiter wirkt die Hülse, wie nachsteht noch im einzelnen beschrieben, auch mit einem Kupplungsteil in der Rührgefäßaufnahme zusammen, das in Verlängerung der Hülse und trotz einem Schrägverlauf auch im Bereich der Rührgefäßaufnahme außerhalb des Rührgefäßes ausgebildet ist. Zur Sicherung des Rührgefäßes in der Küchenmaschine bzw. zur Sicherung des Deckels an dem Rührgefäß ist es nicht erforderlich, daß das Rührgefäß eine Durchbrechung in seiner Wandung aufweist. Die Kupplungsstange weist in weiterer Ausgestaltung an ihrem unteren Ende eine Formschlußaussparung auf, zur formschlüssigen Verbindung mit dem Kupplungsteil der Rührgefäßaufnahme. Bei in die Rührgefäßaufnahme eingesetztem Rührgefäß ist so durch eine Verdrehung der Sicherungseinrichtung zugleich eine Betätigung des Kupplungsteiles erreicht. In weiterer Ausgestaltung des Erfindungsgegenstandes kann vorgesehen sein, daß der Sicherungsstift als Hebelfortsatz drehfest mit der Kupplungsstange verbunden ist. Der als Hebelfortsatz ausgebildete Sicherungsstift greift in einer Dreh-Sperrstellung in eine entsprechend ausgebildete Öffnung des Handgriffes ein. Diese Sperrstellung ist durch ein Aufsetzen des Rührgefäßdeckels auflösbar, indem hierbei der Sicherungsstift entsprechend der zuvor beschriebenen Ausgestaltung aus dieser Sperröffnung herausbewegt wird. Hierzu kann vorgesehen sein, daß der Sicherungsstift an der Kupplungsstange federabgestützt ist. So wird bspw. vorgeschlagen, daß die den Sicherungsstift aufnehmende Sperröffnung nach außen hin, das heißt in Richtung auf den Rührgefäßdeckel offen ausgebildet ist und daß der Rührgefäßdeckel einen in diese Öffnung eingreifenden Entriegelungsstift aufweist. Letzterer bewirkt ein Ausfahren des als Hebelfortsatz ausgebildeten Sicherungsstiftes aus der Sperröffnung heraus, entgegen einer Federkraft. Hiernach kann eine Verdrehbewegung der Sicherungseinrichtung erfolgen. Weiterhin kann vorgesehen sein, daß die Kupplungsstange in dem Halterungsgriff gekrümmt verläuft, wobei die Krümmung im wesentlichen zu einer Mittelachse des Rührgefäßes hin verläuft. Dadurch bedingt, daß die Kupplungsstange in dem Halterungsgriff verläuft, ist die Ausgestaltung des Halterungsgriffes direkt abhängig von der Ausgestaltung der Kupplungsstange. Bedingt durch die gekrümmte Ausbildung der Kupplungsstange ist somit die Möglichkeit gegeben, den Handgriff derart auszugestalten, daß der eigentliche Griffbereich relativ nahe an dem Rührgefäß ausgeformt ist. Dementsprechend stellen sich lediglich geringe Hebelkräfte, vor allem bei einem gefüllten Rührgefäß ein. Bevorzugt ist hierbei eine Ausgestaltung, bei welcher die Kupplungsstange eine zweifache Krümmung aufweist, eine im oberen und eine im unteren Bereich des Halterungsgriffes. Im oberen Bereich des Halterungsgriffes ist hierbei bevorzugt eine starke Krümmung in Richtung zu der Mittelachse des Rührgefäßes hin gebildet. Die im unteren Bereich des Halterungsgriffes vorgesehene zweite Krümmung bringt die Kupplungsstange wieder in eine senkrechte Position zur Kupplung mit dem Kupplungsteil der Rührgefäßaufnahme. Bezüglich dieser Kupplung wird vorgeschlagen, daß die Kupplungsstange ein unterseitig aus dem Halterungsgriff hervorragendes Kupplungsende aufweist. Dieses Kupplungsende ist entsprechend zu dem diesem zugeordneten oberen Ende des Kupplungsteiles ausgeformt. Dieses Ende kann bspw. eine Formschlußaussparung aufweisen. Bevorzugt wird hierbei jedoch eine Ausgestaltung, bei welcher das Kupplungsende hammerkopfartig gestaltet ist. Wie bereits erwähnt, ist in einer Ausgestaltung vorgesehen, daß in der Rührtopfaufnahme ein Kupplungsteil ausgebildet ist, zur Verbindung mit dem Kupplungsende der Kupplungsstange. Das Kupplungsteil weist eine der Ausgestaltung des Kupplungsendes entsprechende Ausbildung auf. Das Kupplungsteil bewirkt bei einer Drehbetätigung der Sicherungseinrichtung des Rührgefäßes eine Verklammerung des Rührgefäßes in der Rührgefäßaufnahme. Hierdurch ist eine kraftschlüssige Halterung des Rührgefäßes in der Rührgefäßaufnahme erreicht. Es wird hierbei eine Ausgestaltung bevorzugt, bei welcher das Kupplungsteil die Kupplungsstange mit einer eine Festsetzung des Rührgefäßes in der Rührtopfaufnahme aktivierenden Nockenwelle verbindet. Letztere bewirkt bei einer Verdrehung der Kupplungsstange bzw. des Kupplungsteiles bspw. eine Aufspreizung einer Halterungsmanschette bzw. eine Verklemmung des Rührgefäßes mittels dieser Manschette. Eine nach einem Aufsetzen des Rührgefäßdeckels ermöglichte Schwenkbewegung eines halterungsgriffseitigen Verriegelungshebels bewirkt somit eine Verdrehung der Kupplungsstange und eine damit einhergehende Verdrehung des Kupplungsteiles und der mit diesem verbundenen Nockenwelle. In einer Einzelheit wird hierzu vorgeschlagen, daß das Kupplungsteil aus einer auf der Nockenwelle oberseitig aufgeschobenen Kupplungshülse besteht. Um die Drehbewegung des Kupplungsteiles auf die Nockenwelle zu übertragen, ist hier eine formschlüssige Verbindung zwischen der Kupplungshülse und der Nockenwelle vorgesehen, wozu bspw. die Kupplungshülse mit einem Steg in eine entsprechende Aussparung der Nockenwelle eingreift. Weiter wird vorgeschlagen, daß die Kupplungshülse gegen eine Feder auf der Nockenwelle vertikal verschiebbar ist. Im Bereich dieser Verschiebbarkeit ist der Formschluß zwischen Kupplungshülse und Nockenwelle stets gegeben. Die Feder wirkt bevorzugt in Richtung auf die Kupplungsstelle mit dem Kupplungsende der Kupplungsstange. Dementsprechend ist die Kupplungshülse stets in Richtung auf die Kupplungsstelle vorgespannt. Bei einem Aufsetzen des Rührgefäßes in die Rührgefäßaufnahme und einem damit einhergehenden Beaufschlagen des Kupplungsendes auf die Kupplungshülse, kann letztere gegen die Feder auf der Nockenwelle vertikal verschoben werden, ohne den Formschlußeingriff mit der Nockenwelle zu verlieren. Hierdurch können bspw. etwaige Fertigungstoleranzen bezüglich der Kupplungsstangenlänge aufgefangen werden. Es wird weiterhin vorgeschlagen, daß die Kupplungshülse eine Blockiermanschette aufweist, welche mit der Kupplungshülse vertikal gekoppelt ist, jedoch relativ zur Kupplungshülse drehbar ist. Mit Hilfe dieser Blockiermanschette wird das Kupplungsende der Kupplungsstange nach einem Verschwenken gefangen, so daß in dieser Stellung ein Herausziehen der Kupplungsstange verhindert ist. Bei einem Verdrehen der Kupplungsstange wird, wie bereits erwähnt, die Kupplungshülse und damit einhergehend die Nockenwelle verdreht. Die Blockiermanschette hingegen verbleibt in ihrer ursprünglichen Ausrichtung, kann jedoch bedingt durch die vertikale Kopplung mit der Kupplungshülse die Vertikalbewegung mitvollziehen. In Einzelheit wird hierzu vorgeschlagen, daß die Blockiermanschette eine Formöffnung aufweist, angepaßt an die Hammerkopfausbildung des Kupplungsendes der Kupplungsstange. Bei einem Einsetzen des Rührgefäßes in die Rührgefäßaufnahme tritt das hammerkopfartig ausgebildete Kupplungsende der Kupplungsstange durch die Formöffnung der Blockiermanschette und beaufschlagt die Kupplungshülse des Kupplungsteiles. Die Kupplungshülse und die daran gekoppelte Blockiermanschette werden hierbei gegen die Feder auf der Nockenwelle vertikal verschoben. Nach Durchtritt durch die Blockiermanschette greift das Kupplungsende in eine entsprechend ausgeformte Aussparung der Kupplungshülse ein, zur Bildung eines drehfesten Formschlusses. Bei einem Verdrehen der Kupplungsstange wird über diesen Formschluß die Kupplungshülse und damit auch die Nockenwelle mitverdreht. Die Blockiermanschette hingegen ist bspw. über gehäuseseitig angeordnete Drehsicherungsstifte nicht drehbar. Nach einer vollzogenen Verdrehung stellt sich eine Blockierstellung ein, bei welcher das hammerkopfartig ausgebildete Kupplungsende derart zu der Formöffnung der Blockiermanschette verdreht ist, daß ein Herausziehen des Kupplungsendes aus dem Kupplungsteil und damit ein Auflösen der Kupplung ohne ein vorheriges Verdrehen der Kupplungsstange in eine Lösestellung verhindert ist. Es wird sich hierbei das Schlüsselloch-Prinzip zunutze gemacht. Hierbei ist weiterhin von Vorteil, daß bei aufgesetztem Rührgefäß keine mechanische Verbindung zwischen dem Küchenmaschinen-Gehäuse und allen anderen Komponenten besteht. Fertigungstoleranzen in vertikaler Richtung werden ausgeglichen, da die gebildete Kupplung durch Beaufschlagung mittels des Kupplungsendes in das Gehäuse eintaucht. Die Gehäuseöffnung zum Durchtritt des Kupplungsendes der Kupplungsstange kann derart groß ausgebildet sein, daß Toleranzen in horizontaler Richtung zu keiner Berührung von Kupplungsstange und Gehäuse führen. Durch die spezielle Formgebung der Blockiermanschette ist der Benutzer gezwungen, die Kupplungsstange bzw. das Kupplungsende ganz in die Grundstellung zu verdrehen, um das Rührgefäß aus der Aufnahme zu entnehmen. Ohne diese spezielle Ausgestaltung in Form eines Schlüsselloches könnte eine Manschette zur Halterung des Rührgefäßes durch eine teilweise Drehung der Nockenwelle gespreizt und der Rührtopf entnommen werden. Das Kupplungsende käme außer Eingriff mit der Kupplungshülse, wonach, bedingt durch eine etwaige Federvorspannung, die Manschette wieder zuschnappen würde. Der Rührtopf wäre in dieser Stellung eingeklemmt, wobei die Manschette durch den Benutzer nicht wieder gespreizt werden könnte. Eine derartige Fehlbedienung ist -bedingt durch die zuvor beschriebene Ausgestaltung- nicht möglich, da die Blockiermanschette direkt auf der Kupplungshülse angebracht ist und das Kupplungsende nur aus dem Eingriff zu der Kupplungshülse gebracht werden kann, wenn ein die Kupplungsstange betätigender Verriegelungshebel ganz in die Grundstellung umgelegt ist; anderenfalls wird die Einheit Blockiermanschette mit Kupplungshülse von dem hammerkopfartig ausgebildeten Kupplungsende nach oben gezogen, bis sich diese Einheit an dem Gerätegehäuse abstützt. Weiter ist hierbei bei Einsatz einer Wägeeinrichtung noch von Vorteil, daß bei einem eingesetzten Rührtopf das Wiegeergebnis nicht beeinflußt wird. Bedingt durch die erwähnte Ausgestaltung wird die komplette Sicherungseinrichtung inklusive Kupplungshülse und Blockiermanschette von dem Gehäuse vollständig entkoppelt. In einer bevorzugten Ausgestaltung ist vorgesehen, daß die Blockierungsmanschette oberseitig eine Dichtwulst ausbildet zur dichtenden Zusammenwirkung mit dem Gehäuse. Bevorzugt ist hierbei eine Ausgestaltung, bei welcher die Dichtung bei entnommenem Rührtopf aktiviert und bei aufgesetztem Rührtopf deaktiviert ist. Ist der Rührtopf aufgesetzt, so wird die Blockiermanschette mitsamt der Kupplungshülse, wie bereits erwähnt, in vertikaler Richtung entgegen der Feder auf der Nockenwelle von der Gehäuseöffnung weg verschoben. Wird der Rührtopf entnommen, so wird die Einheit Kupplungshülse und Blockiermanschette, bedingt durch die vertikal wirkende Feder, in Richtung auf die Gehäuseöffnung verlagert, so daß die Dichtwulst der Blockiermanschette die Gehäuseöffnung umfaßt. Hier kann bspw. vorgesehen sein, daß die Gehäuseöffnung innenseitig, das heißt der Blockiermanschette zugewandt, kegelförmig ausgebildet ist und die Blockiermanschette eine entsprechend ausgeformte Dichtwulst aufweist. Bei entnommenem Rührgefäß fügen sich die Kegel der Gehäuseöffnung und der Blockiermanschette ineinander und dichten die Fügestelle ab. Die in der Kupplungshülse gebildete Mitnehmertasche ist nach untenhin, das heißt zum Geräteinneren hin, geschlossen. Etwaiges sich auf dem Gerätegehäuse ansammelndes Wasser oder Kondensat kann somit nur in die Mitnehmertasche der Kupplungshülse gelangen, jedoch nicht in das Innere des Gehäuses. Das Kupplungsteil ist im einzelnen mit einem Spreizknebel verbunden, welcher bei einer Betätigung Vorspannkräfte eines Spreizelementes, welches das Rührgefäß in der Rührgefäßaufnahme verklammert, freigibt. Wenn die Sicherungseinrichtung sich also in einer Stellung befindet, in welcher das Rührgefäß aus der Rührgefäßaufnahme entnommen werden kann, befindet sich der Spreizknebel in einer Spreizstellung und das Spannelement weist eine maximale innere Spannung auf. Im einzelnen kann das Spannelement integriert in ein manschettenartiges Heizelement aufgenommen sein. Weiter ist bevorzugt vorgesehen, daß mit der Sicherungseinrichtung ein Sicherungshebel verbunden ist, dessen Bewegung zur Betätigung eines Sicherheitsschalters ausgenutzt ist. Hierzu kann bspw. vorgesehen sein, daß die Bewegung des Sicherungshebels durch den Sicherheitsschalter detektierbar ist. Eine Detektierung einer Bewegung des Sicherungshebels in seine Sicherungsstellung kann zur Freischaltung des Rührwerkes und auch gegebenenfalls der Heizung ausgenutzt werden. Auf diese Weise kann sichergestellt sein, daß das Rührwerk und die Heizung nur betätigbar sind, wenn das Rührgefäß in der Rührgefäßaufnahme gesichert ist. Weiter ist aufgrund der weiter oben beschriebenen Maßnahme, daß eine Betätigung der Sicherungseinrichtung überhaupt nur ermöglicht ist, wenn das Rührgefäß mit einem Rührgefäßdeckel versehen ist, hierdurch auch gleichzeitig sichergestellt, daß bei Betrieb des Rührwerkes der Rührgefäßdeckel von dem Rührgefäß nicht abgenommen werden kann. In einer Ausgestaltung des Erfindungsgegenstandes kann vorgesehen sein, daß der Sicherheitsschalter durch einen gesonderten, mit dem Sicherungshebel zusammenwirkenden Tastschalter betätigbar ist. Der Sicherheitsschalter, welcher bevorzugt ein Kontaktschalter ist, wird nach einem Einsetzen des Rührgefäßes in die Rührgefäßaufnahme und nach einem Betätigen der Sicherungseinrichtung mittels des mit dem Sicherungshebel zusammenwirkenden Tastschalters betätigt. Erst nach Betätigung der Sicherungseinrichtung ermöglicht der Sicherungshebel dem Tastschalter, den Sicherheitsschalter zu betätigen. Dies wird dadurch realisiert, daß der Sicherheitshebel eine Blockierungskulisse aufweist, welche in Abhängigkeit eines Drehwinkels des Sicherheitshebels die Tastbetätigung des Sicherheitsschalters durch den Tastschalter ermöglicht. Befindet sich der Sicherheitshebel in einer Grundstellung, d. h. bei nicht eingesetztem Rührgefäß bzw. nicht aufgesetztem Rührgefäßdeckel, so verhindert die Blockierungskulisse eine Betätigung des Sicherheitsschalters durch den Tastschalter. Letzterer wird durch die Blockierungskulisse des Sicherheitshebels gesperrt. Wird in dieser Stellung versucht, das Rührwerk zu aktivieren, so führt dies nicht zum Erfolg, da der Sicherheitsschalter keine Freigabe erlaubt. Bswp. kann mittels des Sicherheitsschalters die Stromzufuhr zu dem Rührwerk unterbrochen sein. Weiter kann dieser Sicherheitsschalter auch die Stromzufuhr zu einer Heizung unterbrechen. Erst nach einem korrekten Einsetzen des Rührgefäßes in die Rührgefäßaufnahme und einem Aufsetzen des Rührgefäßdeckels kann die Sicherungseinrichtung, wie beschrieben, betätigt werden. Hierbei erfolgt auch eine Drehbewegung des Sicherheitshebels, wobei nach Erreichen einer Endstellung der Tastschalter den Bereich der Blockierungskulisse verläßt und den Sicherheitsschalter betätigt. Das Rührwerk und gegebenenfalls auch die Heizung werden hiernach aktiviert. Bei einem Versuch, den Rührgefäßdeckel während des Betriebes abzunehmen, wird wiederum die Sicherungseinrichtung zurück in die Grundstellung betätigt. Dies bewirkt auch ein Zurückverschwenken des Sicherheitshebels, wobei die Blockierungskulisse den Tastschalter von dem Sicherheitsschalter abhebt, was zu einer Unterbrechung der Stromversorgung des Rührwerkes bzw. der Heizung führt. In einer Weiterbildung des Erfindungsgegenstandes ist vorgesehen, daß der Tastschalter in Abhängigkeit einer Drehbewegung des Antriebes bzw. eines Messersatzes in seine Betätigungsstellung beaufschlagt ist. Nach Aufsetzen des Rührgefäßes und des Rührgefäßdeckels und einer hiernach erfolgenden Betätigung der Sicherungseinrichtung verläßt, wie bereits erwähnt, der Sicherheitshebel mit seiner Blockierungskulisse den den Tastschalter sperrenden Bereich. Ein Einschalten des Rührwerkantriebes bewirkt nunmehr eine Verlagerung des Tastschalters in Richtung auf den Sicherheitsschalter, um diesen zu betätigen. Erst hiernach erfolgt das Anlaufen des Rührwerkes. Hierzu wird vorgeschlagen, daß die Beaufschlagung durch einen Elektromagneten erfolgt. Dieser wird bei Einschalten des Rührwerkes aktiviert. Der Elektromagnet ist bevorzugt mit einem Stößel versehen, welcher bei Aktivierung des Elektromagneten ausfährt und gegen den Tastschalter drückt. Hierdurch wird der Tastschalter in Richtung auf den Sicherungsschalter bewegt. Ist die Sicherungseinrichtung noch nicht in eine Freigabestellung verschwenkt worden, so tritt der Tastschalter gegen die Blockierungskulisse des Sicherheitshebels. Sobald diese Blockierungskulisse den den Tastschalter sperrenden Bereich verlassen hat, beaufschlagt dieser den Sicherheitsschalter. Es ist vorgesehen, daß nach einem Abschalten des Rührwerkes der Elektromagnet nicht direkt abfällt. Vielmehr wird vorgeschlagen, daß ein Abfallen des Elektromagneten erst bei einem Stillstand der Messer erfolgt. Hierzu kann ein Drehzahlabnehmer vorgesehen sein, über welchen die Drehbewegungen des Rührwerkes abgetastet werden. Weiter ist auch vorgesehen, daß der Sicherungshebel in seiner Sicherungsstellung verriegelbar ist. Dieses ist als zusätzlicher Sicherung vorgesehen, um auch mechanisch sicherzustellen, daß eine Entriegelung und eine Entnahme des Rührgefäßes aus der Rührgefäßaufnahme nur möglich ist, wenn das Rührwerk und gegebenenfalls die Heizung abgestellt ist. Der Rührgefäßdeckel kann bspw. derart auf dem Rührgefäß angeordnet sein, daß der Deckel handgriffseitig in der verriegelten Stellung durch den Verriegelungshebel gefangen ist und an der dem Handgriff gegenüberliegenden Seite mit dem Rührgefäß verhakt ist. Hierzu kann vorgesehen sein, daß der Rührgefäßdeckel einen, mit einem Schlitz versehenen Steg und das Rührgefäß eine Zunge aufweist, wobei bei aufgesetztem Rührgefäßdeckel die Zunge in den Schlitz eingreift. Zum Aufsetzen des Rührgefäßdeckels wird dieser auf das Rührgefäß gehebelt derart, daß die Zunge, welche auch als Ausgießnase ausgeformt sein kann, in den Schlitz des rührgefäßdeckelseitigen Steges eingreift. Hiernach erfolgt ein Verschwenken des Rührgefäßdeckels in Richtung auf den Rührgefäßhandgriff, in welchem Bereich eine Verriegelung des Deckels mittels des Kupplungs-Verriegelungshebels erfolgen kann. Weiterhin betrifft die Erfindung auch einen Gareinsatz, der in dem Rührgefäß, überfangen von dem Rührgefäßdeckel, anordbar ist. Der Gareinsatz ist bevorzugt im einzelnen derart ausgebildet, daß er eine im wesentliche konische oder zylindrische Wandung aufweist und einen sich im wesentlichen rechtwinklig zu der Wandung erstreckenden Kragen. Sowohl die Wandung wie auch der Kragen weisen Durchbrechungen auf, so daß in dem Rührgefäß erzeugte Dämpfe, insbesondere durch Aktivierung der Heizung, etwa in dem Gareinsatz befindliches Gargut durchziehen können. Bevorzugt ermöglichen diese Durchbrechungen auch ein Umspülen von Speisen (z. B. Reis) mit kochendem Wasser oder ähnlichem. Die Durchbrechungen in der Wandung sind insbesondere auch dazu vorteilhaft, daß bei eingesetztem Gareinsatz ein Ausschenken von in dem Rührgerät befindlicher Flüssigkeit durch das Gargefäß hindurch gebrauchsgünstig möglich ist, da eben auch der angesprochene Kragen aufgrund der Öffnungen durchströmbar ist. Bei einem Ausschenken von Flüssigkeiten werden darin enthaltene feste Bestandteile wirkungsvoll von dem Gareinsatz zurückgehalten. Weiter kann der Gareinsatz auch vor einem Zerkleinern von z. B. Früchten in den Rührtopf eingesetzt werden. Dies führt zu einer gesteigerten Saftausbeute, da die Früchte nicht in den oberen Teil des Rührtopfes gelangen können und so intensiver durch die Messer bearbeitet werden. Weiter ist auch bevorzugt an dem Gareinsatz ein Haken oder ein Stange, welche hintergreifbar ist, ausgebildet. So ist es möglich, den Gareinsatz, der weiter in dem Rührgefäß nicht verriegelt ist, durch einen Niederhalter oder dgl. zu halten, während ein Ausschenken aus dem Rührgefäß bei eingesetztem Gareinsatz erfolgt. Der angesprochene Kragen besitzt eine ellipsenartig begrenzte Grundfläche, während die Wandung des Gareinsatzes bevorzugt einen im wesentlichen kreisförmigen Öffnungsquerschnitt aufweist. Ein Mittelpunkt der Ellipse der Kragengrundfläche ist hierbei in vergleichbarer Weise wie zuvor im Hinblick auf die Geometrie des Rührgefäßes an sich beschrieben, gegenüber einem Mittelpunkt der Wandung des Gareinsatzes bzw. eines - auch im wesentlichen bevorzugt kreisförmigen - Bodens des Gareinsatzes versetzt. Im einzelnen ist die Versetzung richtungsmäßig in gleicher Weise bevorzugt vorgesehen wie weiter oben im Hinblick auf das Rührgefäß beschrieben. Weiterhin ist im Rahmen der Erfindung auch bevorzugt ein Rühraufsatz, insbesondere ein Sahnerührer vorgesehen. Dieser zeichnet sich dadurch aus, daß er eine Steckaufnahme aufweist zur Steckverbindung mit einem Messersatz des Rührwerks. Im Unterschied zu bekannten Rührwerken ist es nicht erforderlich, um den Rühraufsatz zu installieren, die Messer aus dem Rührgefäß zunächst zu entfernen. Eine Demontage des Messersatzes ist für eine Benutzung des Rühraufsatzes nicht erforderlich. Vielmehr kann der Rühraufsatz einfach auf die Messer von oben aufgesteckt werden. Die vertikale Bewegbarkeit, die für den Rühraufsatz verbleibt, ist nicht hinderlich. Er ist aber durch die formschlüssige Aufnahme drehgesichert. Hinsichtlich der vertikalen Bewegbarkeit kann im übrigen auch eine Verrastung vorgesehen sein. Der Rühraufsatz zeichnet sich weiter im einzelnen bevorzugt dadurch aus, daß er in radialer Richtung mit zunehmender Flexibilität ausgebildet ist. Der Rühraufsatz ist auch bevorzugt flügelartig ausgebildet, wobei er durchlöchert ist bzw. insgesamt gitterartig aufgebaut ist. Der Rühraufsatz kann als Kunststoffspritzteil hergestellt sein. In einer Ausgestaltung des Erfindungsgegenstandes ist vorgesehen, daß der Messersatz mit einem Messerlager betrieblich nicht lösbar verbunden ist und daß das Messerlager unter Durchsetzung des Rührgefäßbodens an dem Rührgefäß befestigbar ist. Bedingt durch diese Ausgestaltung ist gewährleistet, daß bei Austausch des Messersatzes stets die Einheit aus Messersatz und Messerlager ausgewechselt wird. Der Messersatz ist für den Bediener unlösbar mit dem Messerlager verbunden. Im einzelnen ist hierbei vorgesehen, daß zwischen einem Absatz des Messerlagers und dem Rührgefäßboden ein Dichtring vorgesehen ist, der axial zwischen dem Messerlager und dem Rührgefäßboden abdichtet. Somit kann keine Flüssigkeit aus dem Rührgefäß austreten. Die Befestigung des Messerlagers an dem Rührgefäßboden erfolgt mittels eines von außen gegenhalternden Standfußes. Die erwähnte Dichtung erhält eine definierte Vorspannung durch den Standfuß, welcher bspw. an zwei seitlich vorstehenden Zapfen an dem Messerlager dieses nach unten gegen den Gefäßboden drückt. Der Standfuß stützt sich dabei gegen die Gefäßbodenunterseite ab. Um die Andrückkraft nahezu toleranzunabhängig zu gestalten, ist in dem Standfuß ein federvorgespannter Rastring befestigt. Dieser Rastring hat einen formschlüssigen Kontakt zu den Zapfen des Messerlagers. Bevorzugt ist hierbei eine Ausgestaltung, bei welcher der Standfuß gegen das Messerlager bajonettverschlußartig verriegelbar ist. Hierzu kann vorgesehen sein, daß das Messerlager nach Einsetzen in den Rührgefäßboden drehfest an dem Boden gehaltert ist. Hiernach erfolgt unterseitig ein Aufsetzen des Standfußes und ein hiernach erfolgendes Verdrehen des Standfußes in die Verriegelungsstellung. Weiter wird vorgeschlagen, daß der Standfuß ein Kunststoffteil ist. Der Standfuß kann somit auch als Aufstellfläche des Rührgefäßes dienen. Die Temperatur des Standfußes ist in allen Fällen erheblich geringer als die des Rührgefäßes, so daß die Möglichkeit gegeben ist, das heiße Rührgefäß auch auf nicht hitzebeständigen Oberflächen, wie bspw. Holz, zu positionieren. Weiterhin ist im Rahmen der Erfindung auch bevorzugt ein Rührgefäßspachtel, wobei dieser einen Entnahmevorsprung aufweist zur Zusammenwirkung mit einem Einsatzgefäß. Der Rührgefäßspachtel kann hierbei der bereits erwähnte Niederhalter sein. Zur Entnahme eines Einsatzgefäßes, bspw. eines Gareinsatzes, aus dem Rührgefäß kann der Rührgefäßspachtel derart eingesetzt werden, daß dessen Entnahmevorsprung in Hintergriff zu einem einsatzgefäßseitigen Steg oder dergleichen tritt. Mittels dieser Ausbildung kann das Einsatzgefäß aus dem Rührgefäß entnommen werden, ohne daß der Benutzer in direkten Kontakt mit dem möglicherweise heißen Einsatzgefäß kommt. Weiterhin ist der Rührgefäßspachtel in üblicher Form bei einer Teigherstellung einsetzbar, indem der Spachtel durch die Rührgefäßdeckelöffnung in das Rührgefäß und dementsprechend in den zu rührenden Teig gehalten wird. In einer bevorzugten Ausgestaltung ist vorgesehen, daß der Entnahmevorsprung schwalbenschwanzförmig gestaltet ist. Weiter wird vorgeschlagen, daß der Entnahmevorsprung oberhalb, im wesentlichen anschließend an einen Spachtelbereich ausgebildet ist. In weiterer Einzelheit wird vorgeschlagen, daß der Rührgefäßspachtel einen Spachtelstiel aufweist und daß an dem Spachtelstiel eine schildartige Griffbereichsbegrenzung ausgebildet ist. Der Spachtelbereich und dementsprechend auch der Entnahmevorsprung ist jenseits der schildartigen Griffbereichsbegrenzung angeordnet. Wird der Rührgefäßspachtel bspw. als Niederhalter während eines Ausschenkens aus dem Rührgefäß bei eingesetztem Gareinsatz verwendet, so verhindert die schildartige Griffbereichsbegrenzung ein Ablaufen von etwaigen Flüssigkeiten oder Kondensaten entlang des Spachtelstieles, was zu Verbrühungen führen könnte. Diese Flüssigkeiten bzw. Kondensate werden von der Griffbereichsbegrenzung abgehalten und tropfen von dieser ab. Vorteilhafterweise ist vorgesehen, daß der Rührgefäßspachtel zweiteilig ausgebildet ist, wobei der Spachtelbereich gesondert ausgebildet ist. Hierzu wird vorgeschlagen, daß der Spachtelbereich aus einem weicheren Kunststoff besteht als der Spachtelstiel und der Entnahmevorsprung. Schließlich ist vorgesehen, daß das Einsatzgefäß eine Aufnahmeöse aufweist und daß die Aufnahmeöse schwalbenschwanzförmig ausgebildet ist. Bedingt durch diese Ausgestaltung ist ein formschlüssiger Eingriff des Entnahmevorsprungs in die Aufnahmeöse zur Entnahme des Einsatzgefäßes aus dem Rührgefäß gegeben.

Nachstehend ist die Erfindung des weiteren anhand der beigefügten Zeichnung, die jedoch lediglich Ausführungsbeispiele darstellt, erläutert. Hierbei zeigt:
- Fig. 1: eine Seitenansicht der Küchenmaschine bei eingesetztem Rührgefäß;
- Fig. 2: eine Draufsicht auf die Küchenmaschine gemäß Fig. 1;
- Fig. 3: eine Stirnansicht der Küchenmaschine gemäß Fig. 1 bzw. Fig. 2;
- Fig. 4: eine Draufsicht auf den Rührgefäßdeckel;
- Fig. 5: eine Seitenansicht des Rührgefäßdeckels, eine erste Ausführungsform betreffend;
- Fig. 6: eine Stirnansicht des Rührgefäßdeckels;
- Fig. 7: eine Unteransicht des Rührgefäßdeckels;
- Fig. 8: einen Querschnitt durch den Rührgefäßdeckel;
- Fig. 9: einen Querschnitt durch den Rührgefäßdeckel in einer in bezug auf die Darstellung gemäß Fig. 8 um 90° versetzten Ebene;
- Fig. 10: eine Einzelheit des Rührgefäßdeckels;
- Fig. 11: eine weitere Einzelheit des Rührgefäßdeckels;
- Fig. 12: eine erste Ausführungsform des Rührgefäßes in einer Seitenansicht;
- Fig. 13: eine Stirnansicht des Rührgefäßes;
- Fig. 14: eine Draufsicht auf das Rührgefäß;
- Fig. 15: eine Unteransicht des Rührgefäßes;
- Fig. 16: eine Schnittdarstellung des Rührgefäßes gemäß Fig. 12 mit aufgesetztem Rührgefäßdeckel;
- Fig. 17: eine Schnittdarstellung gemäß Fig. 16, mit eingesetztem Sahnerührer, einer ersten Ausführungsform;
- Fig. 18: eine Einzelansicht, teilweise geschnitten, der Rührgefäßaufnahme, ebenfalls eine erste Ausführungsform betreffend;
- Fig. 19: eine Ansicht gemäß Fig. 18, wobei der Spreizknebel sich in seiner Spreizstellung befindet;
- Fig. 20: eine Darstellung gemäß Fig. 18, in einer senkrecht dazu liegenden Schnittebene, bei einer Lage des Spreizknebels in seiner Spreizstellung;
- Fig. 21: eine Ausschnittsvergrößerung aus der Darstellung gemäß Fig. 20;
- Fig. 22: eine Darstellung gemäß Fig. 20, wobei der Spreizknebel sich in einer Freigabestellung befindet;
- Fig. 23: eine Ausschnittsdarstellung aus der Darstellung gemäß Fig. 22;
- Fig. 24: eine Einzeldarstellung des Sicherungshebels aus der Darstellung gemäß Fig. 18 bzw. 19;
- Fig. 25: eine Darstellung gemäß Fig. 24, wobei der Sicherungshebel sich der Sicherungsstellung befindet;
- Fig. 26: eine Seitenansicht einer ersten Ausführungsform des Gareinsatzes;
- Fig. 27: eine Stirnansicht des Gareinsatzes;
- Fig. 28: eine Draufsicht auf den Gareinsatz;
- Fig. 29: eine Schnittdarstellung des Gareinsatzes gemäß Fig. 27, geschnitten entlang der Linie XXIX-XXIX;
- Fig. 30: eine Schnittdarstellung des Gareinsatzes gemäß Fig. 28, geschnitten entlang der Linie XXX-XXX;
- Fig. 31: eine Querschnittsdarstellung des Rührgefäßes gemäß Fig. 16 und des eingesetzten Gareinsatzes, bei weiter aufgesetztem Rührgefäßdeckel;
- Fig. 32: eine Draufsicht auf die Rührgefäßaufnahme;
- Fig. 33: eine Schnittdarstellung der Rührgefäßaufnahme bei eingesetztem Rührgefäß, im Bereich eines Aufnahmeablaufes;
- Fig. 34: eine Einzeldarstellung, perspektivisch, eines Rührgefäßspachtels, in einer ersten Ausführungsform;
- Fig. 35: eine Seitenansicht eines Sahnerührers in Einzeldarstellung, eine zweite Ausführungsform betreffend;
- Fig. 36: eine Stirnansicht des Sahnerührers;
- Fig. 37: eine Draufsicht des Sahnerührers;
- Fig. 38: eine Unteransicht des Sahnerührers;
- Fig. 39: eine der Fig. 17 entsprechende Schnittdarstellung des Rührgefäßes mit aufgesetztem Rührgefäßdeckel und eingesetztem Sahnerührer, eine verriegelte Stellung einer Sicherheitseinrichtung darstellend, in einer zweiten Ausführungsform;
- Fig. 39a: eine Detaildarstellung aus der Fig. 39, jedoch die Entriegelungsstellung betreffend;
- Fig. 40: eine weitere Ausführungsform der Sicherheitseinrichtung in der verriegelten Stellung;
- Fig. 40a: eine der Fig. 39a entsprechende Darstellung, jedoch die Ausführungsform gemäß Fig. 40 betreffend;
- Fig. 40b: den Schnitt gemäß der Linie XLb-XLb in Fig. 40a;
- Fig. 41: eine vergrößerte Ausschnittsdarstellung, betreffend eine Unteransicht des Rührgefäßhandgriffes im Bereich des Durchtrittes einer Kupplungsstange;
- Fig. 42: eine geschnittene Detaildarstellung der Rührgefäßaufnahme im Bereich eines Kupplungsteiles, in der gekuppelten Stellung, eine zweite Ausführungsform betreffend;
- Fig. 43: den Schnitt gemäß der Linie XLIII-XLIII in Fig. 42;
- Fig. 44: eine Einzelansicht eines mit einem Messersatz versehenen Messerlagers, teilweise geschnitten, ebenfalls eine zweite Ausführungsform betreffend;
- Fig. 45: einen dem Messerlager zuordbarer Standfuß in einer Schnittdarstellung;
- Fig. 46: die Unteransicht des Messerlagers gemäß Fig. 44;
- Fig. 47: die Unteransicht des Standfußes gemäß Fig. 45;
- Fig. 48: die Unteransicht nach Befestigung des Messerlagers am Rührgefäßboden mittels des Standfußes;
- Fig. 49: eine perspektivische Explosionsdarstellung der in den Fig. 44 und 45 gezeigten Bauteile;
- Fig. 50: eine der Fig. 27 entsprechende Stirnansicht eines Gareinsatzes, eine zweite Ausführungsform betreffend;
- Fig. 51: eine Detaildarstellung aus der Fig. 50, den Bereich LI-LI betreffend, teilweise geschnitten;
- Fig. 52: eine Draufsicht auf den Gareinsatz gemäß Fig. 50;
- Fig. 53: eine der Fig. 5 entsprechende Seitenansicht eines Rührgefäßdeckels in einer zweiten Ausführungsform;
- Fig. 54: eine Seitenansicht des Gareinsatzes gemäß den Fig. 50 bis 52;
- Fig. 55: eine der Fig. 12 entsprechende Seitenansicht des Rührgefäßes gemäß Fig. 39, teilweise geschnitten;
- Fig. 56: einen Rührgefäßspachtel einer zweiten Ausführungsform in einer Seitenansicht;
- Fig. 57: eine Unteransicht des Rührgefäßspachtels;
- Fig. 58: den Schnitt gemäß der Linie LVIII-LVIII aus Fig. 56;
- Fig. 59: eine perspektivische Darstellung einer Entnahme eines Gareinsatzes aus dem Rührgefäß mittels des Rührgefäßspachtels;
- Fig. 60: eine Einzeldarstellung einer Sicherungseinrichtung in einer Sperrstellung, eine zweite Ausführungsform betreffend;
- Fig. 60a: eine Seitenansicht, teilweise geschnitten, zu Fig. 60;
- Fig. 61: eine der Fig. 60 entsprechende Darstellung der Sicherungseinrichtung, jedoch eine Freigabestellung zeigend;
- Fig. 61a: eine der Fig. 60a entsprechende Darstellung, jedoch die Stellung gemäß Fig. 61 betreffend;
- Fig. 62: eine Seitenansicht einer Deckelkrone;
- Fig. 63: die Deckelkrone in einer Draufsicht;
- Fig. 64: eine Schnittdarstellung durch den Bereich einer Rührgefäßdeckelöffnung bei aufgesetzter Deckelkrone.

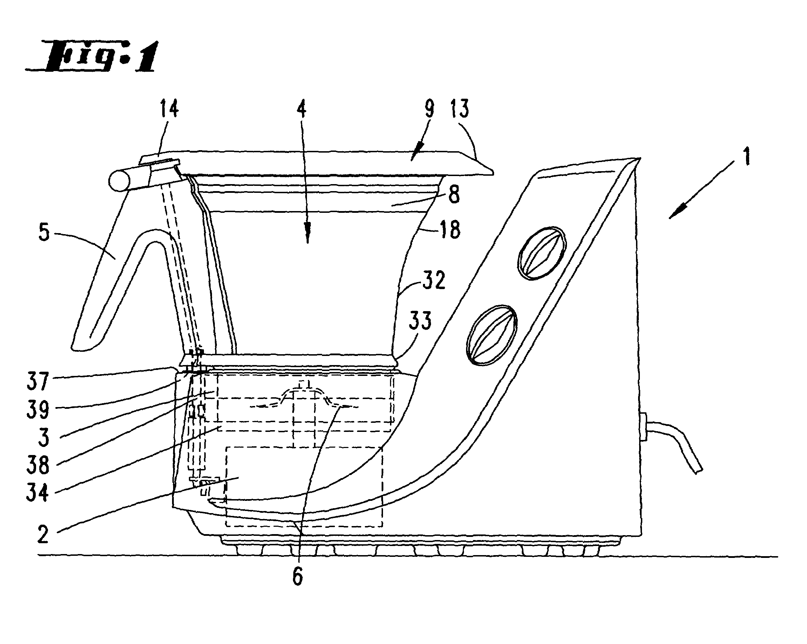

Dargestellt und beschrieben ist - zunächst mit Bezug zu Fig. 1 - eine Küchenmaschine 1, die einen in weiterer Einzelheit nicht dargestellten Rührwerksantrieb 2 in Form eines Elektromotors aufweist. In einer Rührgefäßaufnahme 3 ist ein Rührgefäß 4 aufgenommen, der einen Handgriff 5 aufweist.

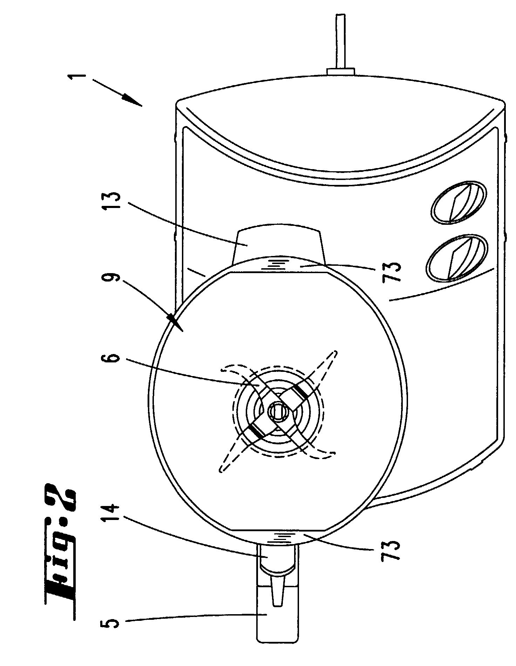

Wie aus der Draufsicht gemäß Fig. 2 zu ersehen ist, befindet sich in dem Rührgefäß 4 ein Messerwerk 6. Das Messerwerk 6 kann auch ausgewechselt und gegen ein anderes Messerwerk ersetzt werden.

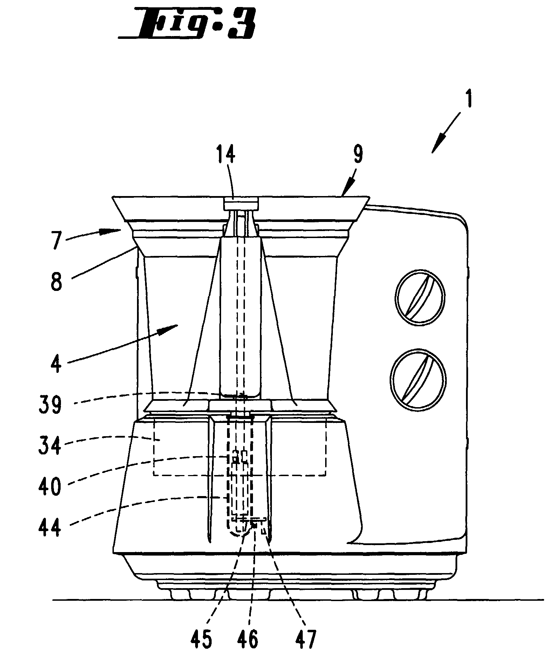

Aus der Darstellung gemäß Fig. 1 aber auch aus der Stirnansicht gemäß Fig. 3 ist zu ersehen, daß das Rührgefäß 4 sich zugeordnet zu seinem oberen Rand 7 mit einem konischen Absatz 8 erweiternd ausgebildet ist.

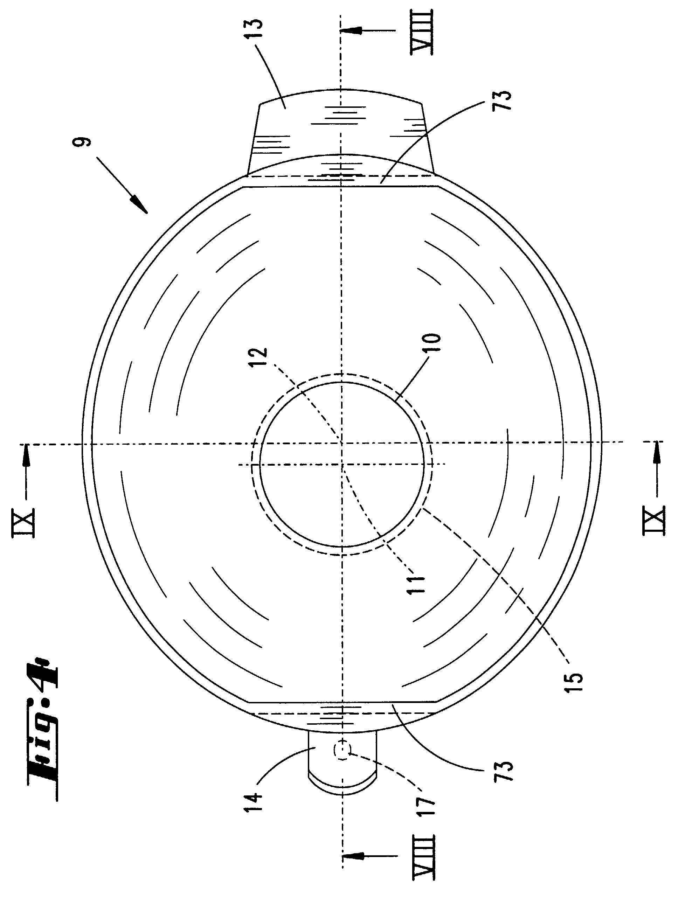

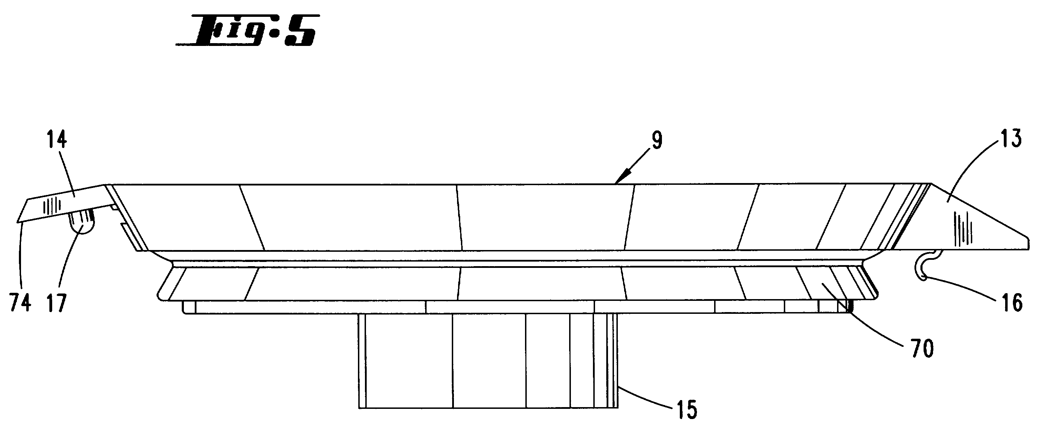

Ein Rührgefäßdeckel 9 ist in Fig. 4 in der Draufsicht dargestellt. Er weist eine im wesentlichen kreisförmige Öffnung 10 auf. Die kreisförmige Öffnung 10 besitzt einen Mittelpunkt 11, der gegenüber einem geometrischen Mittelpunkt 12 des Rührgefäßdeckels 9 versetzt ist. Der Rührgefäßdeckel 9 besitzt eine ellipsenartige Grundfläche. An den Enden des Rührgefäßdeckels 9, welche der größeren Achse der Grundfläche zugeordnet sind, ist einseitig eine Handhabe 13 ausgebildet und gegenüberliegend eine Vorsprungshalterung 14, die nachstehend noch im einzelnen erläutert ist. Wie aus der Seitenansicht gemäß Fig. 5 auch ersichtlich ist, ist unterseitig an der Handhabe 13 ein Verriegelungshaken 16 ausgebildet, der in eine entsprechende Verriegelungsöffnung in dem Rührgefäß 4 im aufgesetzten Zustand des Rührdeckels auf das Rührgefäß eingreift. Weiter ist auch ersichtlich, daß sich an die Öffnung 10 ein nach unten, im aufgesetzten Zustand in das Innere des Rührgefäßes 4 ragender zylindrischer Fortsatz 15 anschließt. Die Vorsprungshalterung 14 weist einen nach unten ragenden Zapfen 17 auf. Dieser wirkt mit der Sicherungseinrichtung zusammen, wie nachstehend noch im einzelnen erläutert.

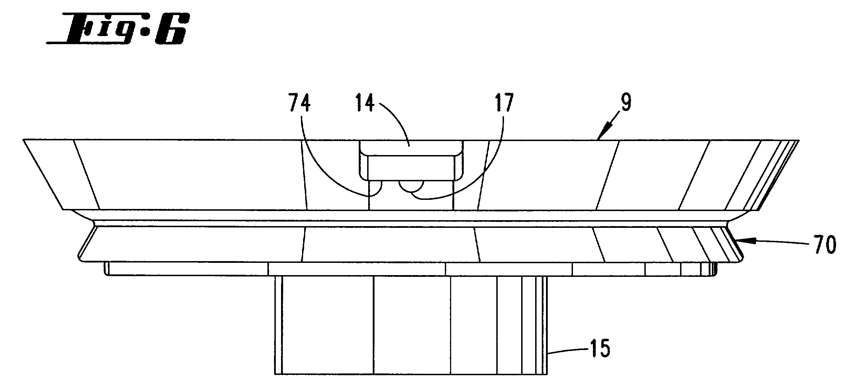

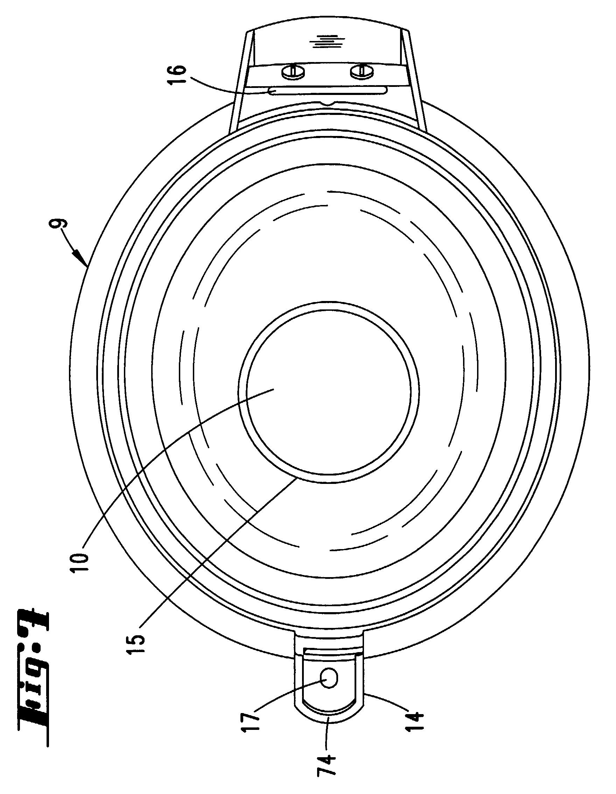

Fig. 6 zeigt die Stirnansicht des Rührgefäßdeckels 9, auf der Seite der Vorsprungshalterung 14. Aus der Zusammenschau der Fig. 5 und 6 ist im einzelnen ein umlaufender Zentrierungsrand 70 zu erkennen, der im eingesetzten Zustand sich im Inneren des Rührgefäßes 4 befindet. Aus Fig. 8 ist weiter im einzelnen zu erkennen, daß der Zentrierungsrand 70 aus einem - weicheren - Kunststoff besteht, der entweder im Zweikomponentenverfahren angespritzt oder als Ring an die Struktur des Rührwerkdekkels 9 angelegt bzw. in die dargestellte Aussparung eingesetzt ist. Im einzelnen weist der Zentrierungsrand 70 eine vorspringende Lippe 71 auf, welche bezüglich eines Massivbereiches 72 des Zentrierungsrandes 70 V-förmig vorspringt. Steht an der Dichtung eine Flüssigkeit an, so drückt diese gegen die Innenseite der Dichtlippe 71, so daß hierdurch die Andrückkraft gegen das Rührgefäß 4 verstärkt wird.

Aus der in Fig. 7 dargestellten Unteransicht des Rührgefäßdeckels 9 ist zu ersehen, daß der Zentrierungsrand 70 in geometrisch gleicher Weise, jedoch verkleinert, entsprechend der Grundfläche des Rührgefäßdeckels 9 auch verläuft. Er ist damit auch angepaßt an einen Öffnungsquerschnitt des Rührgefäßes 4 im oberen Bereich, wie nachstehend noch im einzelnen erläutert.

Fig. 8 zeigt einen Schnitt durch den Rührwerkdeckel in Richtung der größeren Achse der ellipsenförmigen Grundrißfläche.

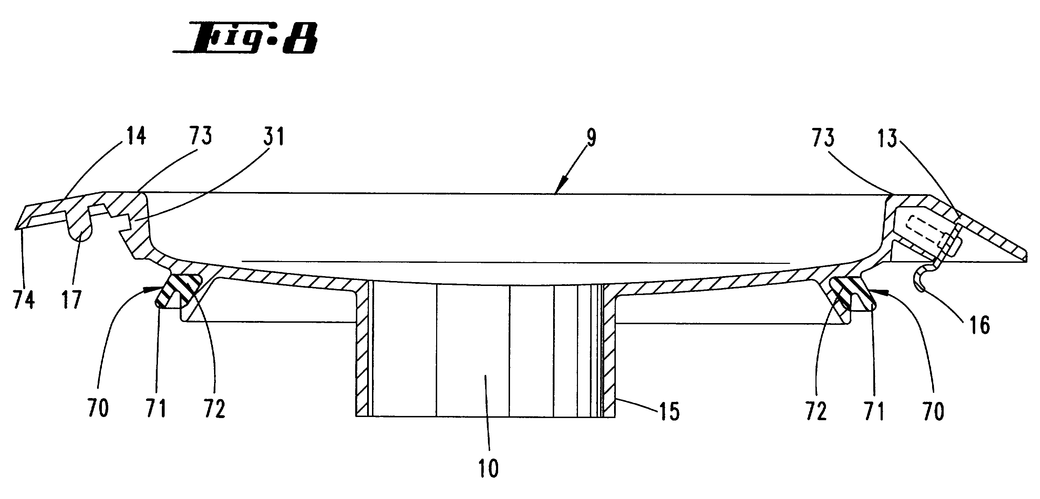

Fig. 9 zeigt einen Querschnitt gemäß der Darstellung gemäß Fig. 8, wobei jedoch die Schnittebene um 90° zu der Schnittebene der Fig. 8 versetzt ist. Wie in Fig. 4 ist auch hier zu erkennen, daß eine an den Schmalseiten ausgebildete - innere - Abschlußfläche 73 gerade verlaufend ausgebildet ist, abweichend von der ansonsten stärker (im Randbereich) bzw. flacher gekrümmten Innenfläche des Rührgefäßdeckels 9.

Aus der Einzelheit der Fig. 10 ist der Zapfen 17, der mit der Sicherungseinrichtung, wie sie nachstehend noch im einzeln erläutert ist, zusammenwirkt, ersichtlich. Er ist mittig bezüglich der Vorsprungshalterung 14 angeordnet, wobei diese auch eine nach unten, in Richtung des Zapfens 17 ragende Vorsprungskante 74 ausbildet.

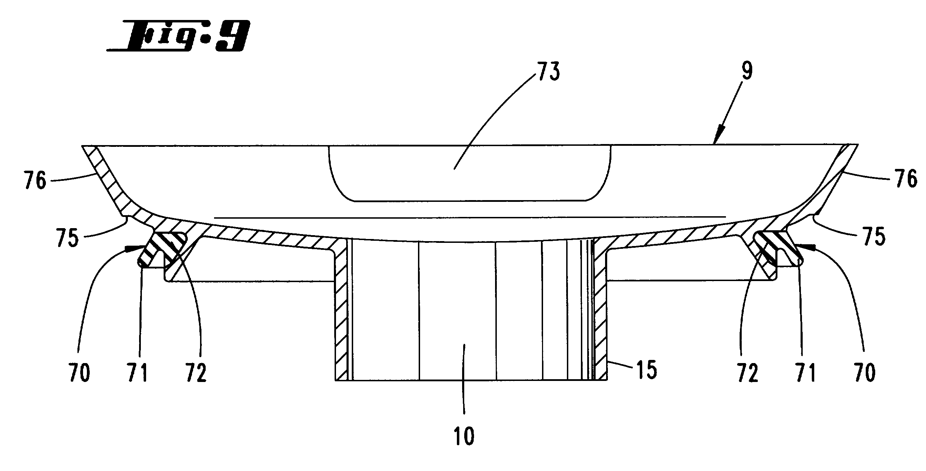

Aus der Einzel-Querschnittsdarstellung der Fig. 11 ist insbesondere auch ein Aufsetzrand 75 zu erkennen, welcher unterseitig an den oberen, außenflächig in Fortführung des Rührgefäßes 4 anschließende Deckelrand 76 ausgebildet ist.

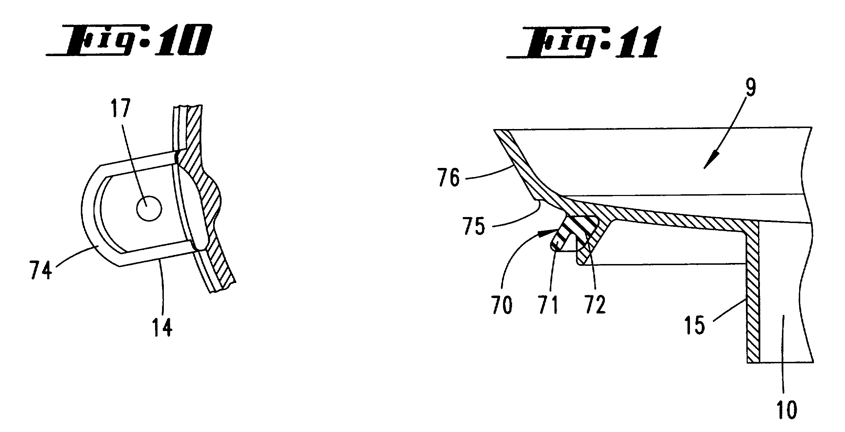

Aus der Seitendarstellung des Rührgefäßes 4 gemäß Fig. 12 ist ersichtlich, daß das Rührgefäß 4 im wesentlichen in drei Bereiche a, b und c aufgeteilt werden kann. Der untere Bereich a ist im wesentlichen zylindrisch ausgebildet. Der daran anschließende Bereich b ist im wesentlichen konisch ausgebildet. Weiterhin schließt nach oben ein Bereich c an, der eine in Gegenrichtung zu dem Handgriff 5 sich erstreckende Ausladung ausbildet, die zu einer gekrümmten vorderen - an der dem Handhebel 5 entgegengesetzten Seite - Konturlinie 18 führt. Diese Konturlinie 18 entspricht auch einer inneren Konturlinie.

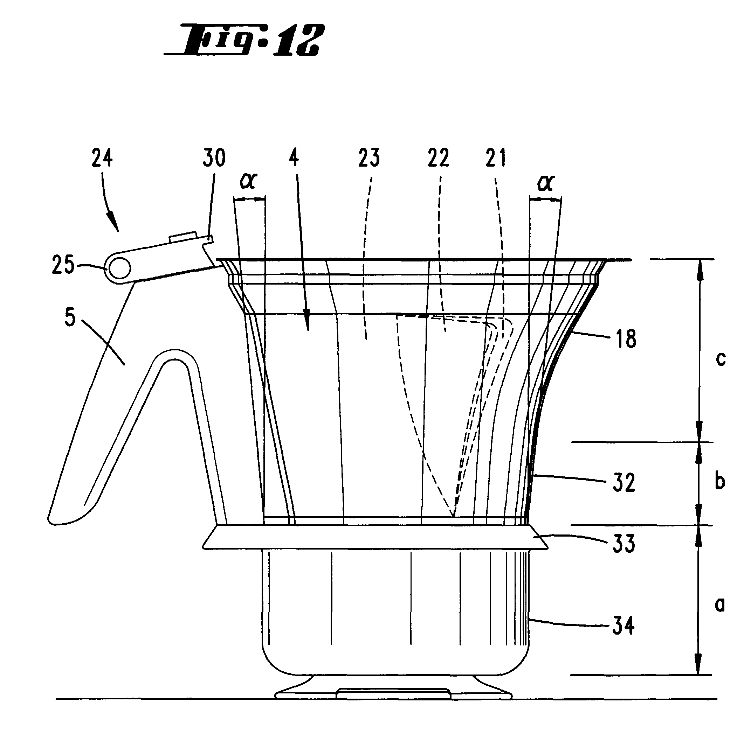

Die Stirnansicht des Rührgefäßes 4 gemäß Fig. 13 zeigt, daß die gekrümmte Konturlinie 18 in den Seitenbereichen des Rührgefäßes 4 nicht ausgebildet ist.

Die Draufsicht gemäß Fig. 14 läßt erkennen, daß ein Mittelpunkt 19 eines kreisförmigen Öffnungsquerschnittes des unteren Bereiches a, der mit einer Drehachse des Messerwerkes zusammenfällt, versetzt ausgebildet ist zu einem Mittelpunkt 19' des ellipsenförmigen oberen Öffnungsquerschnittes des Bereiches c. Die Versetzung v ist in Richtung einer größeren Längsachse x des oberen ellipsenförmigen Öffnungsquerschnittes, wegweisend von dem Handgriff 5, ausgebildet.

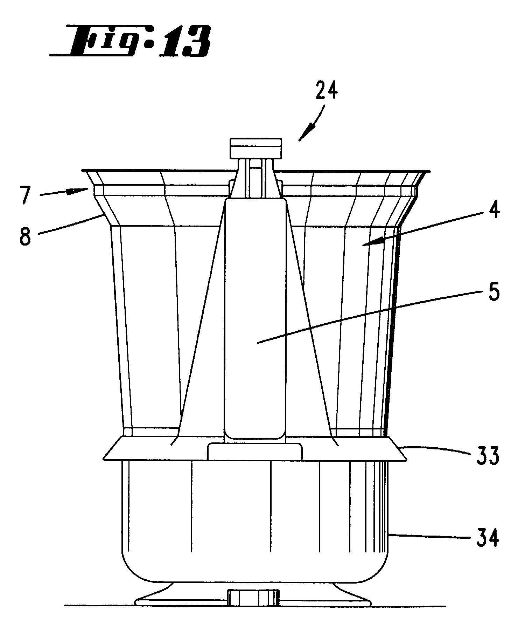

Die Unteransicht gemäß Fig. 15 des Rührgefäßes 4 zeigt insbesondere auch einen sternförmigen Kupplungseinsatz 20 zum Antrieb bspw. des Messersatzes 6,der nachstehend noch weiter im einzelnen beschrieben ist.

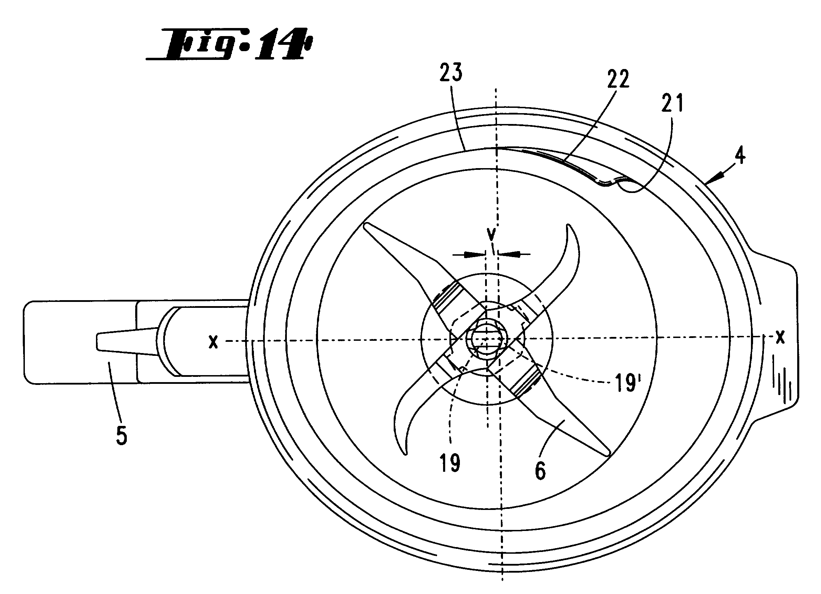

Aus der Querschnittsdarstellung gemäß Fig. 16 ist weiter ersichtlich, daß im Inneren des Rührgefäßes 4 eine nach innen vorspringende Stufe 21 ausgebildet ist. Die Stufe 21 ist Teil einer insgesamt keilförmigen Struktur, die sich im Bereich des mittleren Abschnittes b und des oberen Abschnittes c des Rührgefäßes erstreckt. Die Stufe 21 ist einseitig in dem Rührgefäß ausgebildet, wie sich dies auch insbesondere aus der Darstellung der Fig. 14 ergibt. Die Stufe 21 geht weiter flach auslaufend über eine Fläche 22 in die Innenwandung 23 des Rührgefäßes über. Krümmungsmittelpunkt für die Fläche 22 ist hierbei der Mittelpunkt 19. Die Stufe 21 ist derart vorgesehen, daß sie durch die aufgeprägte Drehbewegung des Rühr- oder Mixgutes überlaufen wird, das Messerwerk oder ein Rühreinsatz also nicht gegen die Stufe 21 anfördert.

Die Stufe 21 ist im übrigen, wie auch aus der zeichnerischen Darstellung ersichtlich, winkelartig ausgebildet, wobei eine obere Stufenfläche etwa am unteren Rand und entlang diesem des Absatzes 8 verläuft. Etwa senkrecht dazu verläuft die weitere Stufenfläche, mit dem gekrümmten Übergang in dem rechten Winkel. Der größte Stufenabsatz ist auch in dem gekrümmten, im wesentlichen rechtwinkligen Übergang zu sehen. Nach unten hin, in dem vertikalen Bereich, verläuft die Stufenfläche insgesamt leicht gekrümmt und derart, daß im Detail kein rechter Winkel, sondern ein spitzer Winkel durch die obere und vertikale Stufenfläche gegeben ist. Nach unten hin verringert sich der Stufenabsatz auch zunehmend, bis er etwa im Bereich einer oberen Begrenzung des Bereichs a des Rührgefäßes 4 ausläuft. Insgesamt erstreckt sich die obere, wandparallele bzw. in der Kreisform der Wand eingebundene Fläche 22 etwa über eine Viertelkreisfläche des Rührgefäßes 4.

In dem Handgriff 5 des Rührgefäßes 4 ist eine Sicherungseinrichtung 24 ausgebildet. Die Sicherungseinrichtung 24 besteht im einzelnen aus einem Handhebel 25, der mit einer als Kupplungsstange ausgebildeten Hülse 26 fest verbunden ist. In der Hülse 26 ist in einem oberen Bereich ein Sicherungsstift 27 aufgenommen. Der Sicherungsstift 27 ist in der Hülse 26 nur vertikal bewegbar, und zwar gegen die Kraft einer Feder 28'.

Der Sicherungsstift 27 wird durch Aufsetzen des Rührgefäßdeckels 9 nach unten gedrückt, und zwar durch den Zapfen 17 (vgl. auch Fig. 8 und 10). Hierdurch wird im einzelnen ein mit dem Sicherungsstift 27 verbundener Sicherungsfortsatz 28 aus einem Langloch 29' der Hülse 26 vertikal nach unten herausbewegt. Der Sicherungsfortsatz 28 gelangt so in eine nutartige, zumindest teilkreisförmig ausgebildete Aussparung 29, so daß eine Verdrehung der Hülse 26 mittels des Handhebels 25 zusammen mit dem Sicherungsstift 27 möglich wird. An dem Handhebel 25 ist weiter eine Sicherungsnase 30 (vgl. auch Fig. 12) ausgebildet, die in eine Sicherungsnut 31 des Rührgefäßdeckels 9 eingreift. Mit einer Verdrehung des Handhebels 25 wird also zugleich der aufgesetzte Rührgefäßdeckel 9 an dem Rührgefäß verriegelt. Ohne ein ordnungsgemäßes Aufsetzen des Rührgefäßdeckels 9 ist aber im Hinblick auf die erforderliche vertikale Bewegung des Sicherungsstiftes 27 eine Verdrehung des Handhebels 25 nicht möglich.

Wesentlich ist, daß der Handhebel 25, der Sicherungsstift 27 und die Hülse 26 außerhalb des eigentlichen Rührgefäßes 4, d.h. außerhalb einer Rührgefäßwandung 32 angeordnet sind. Die Betätigung der Sicherung und zur Ausbildung dieser Sicherung ist eine Durchbrechung der Wandung 32 des Rührgefäßes 4 nicht vorgesehen bzw. erforderlich.

Am Übergang des Bereiches a zu dem Bereich b des Rührgefäßes 4 ist außen an dem Rührgefäß 4 ein umlaufender Aufsetzrand 33 ausgebildet. In dem unteren Bereich der Rührgefäßwandung ist auch noch eine Zweitwandung 34 vorgesehen, welche in dem Aufsetzrand 33 ausläuft. Dieser Aufsetzrand 33 vergrößert sich hinsichtlich seines Durchmessers zu der Seite hin, an welcher der Handgriff 5 ausgebildet ist. Der Aufsetzrand 33 befestigt zugleich auch den Handgriff 5 mit an dem Rührgefäß 4, in dessen unteren Bereich. Im oberen Bereich (vgl. Fig. 16) ist der Handgriff 5 mittels einer Schraubverbindung 77 mit der Rührgefäßwandung 32 schraubverbunden.

Im Detail ist die Befestigung des Handgriffes 5 an dem Rührgefäß 4 derart ausgebildet, daß der Handgriff 5, wie zuvor erwähnt, im oberen Bereich mit der Rührgefäßwandung 32 verschraubt und im unteren Bereich an dem Aufsetzrand 33 bspw. durch Einhaken verbunden ist.

Sollten bei eingesetztem Rührgefäß 4 etwaige Speisen oder Flüssigkeiten an diesem außenwandig herunterlaufen, so leitet der Aufsetzrand 33 diese Speisen oder Flüssigkeiten um die Rührgefäßaufnahme 3 herum, so daß eine dort angeordnete Heizung oder ähnliches nicht verschmutzt wird. Dies könnte zu einem "Verbacken" des Rührgefäßes 4 in der Aufnahme 3 führen, wonach ein Abnehmen des Gefäßes 4 aus der Aufnahme zumindest erschwert wird. Vielmehr fließen die abtropfenden Speisen oder Flüssigkeiten am Gehäuse ab.

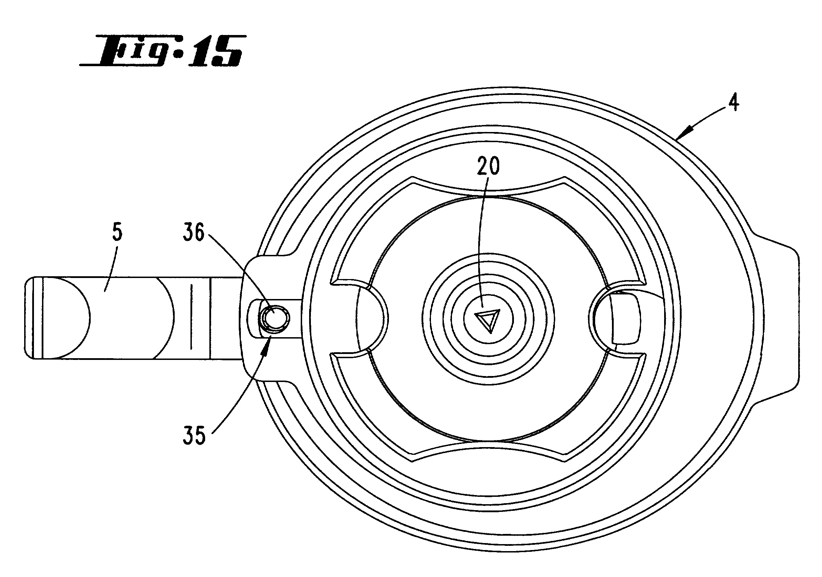

Ein freies Ende 35 der Hülse 26 weist in Höhe des Aufsetzrandes 33 eine Formschlußöffnung 36 auf. Die Form36 wirkt mit einem Kupplungsteil 38 in der Rührgefäßaufnahme 3 zusammen. Dieses Kupplungsteil 38 ist in Fig. 18 im oberen Bereich schematisch angedeutet, wobei hier nur gestrichelt ein Ende der Hülse 26 dargestellt ist. Das Kupplungsteil 38 besitzt einen Querzapfen 39, der in die Formschlußausnehmung 36 der Hülse 26 eingreift. Das Rührgefäß ist entsprechend in die Rührgefäßaufnahme 3 nur einsetzbar, wenn sich der Handhebel 25 in einer Stellung entsprechend der Öffnungsstellung befindet.

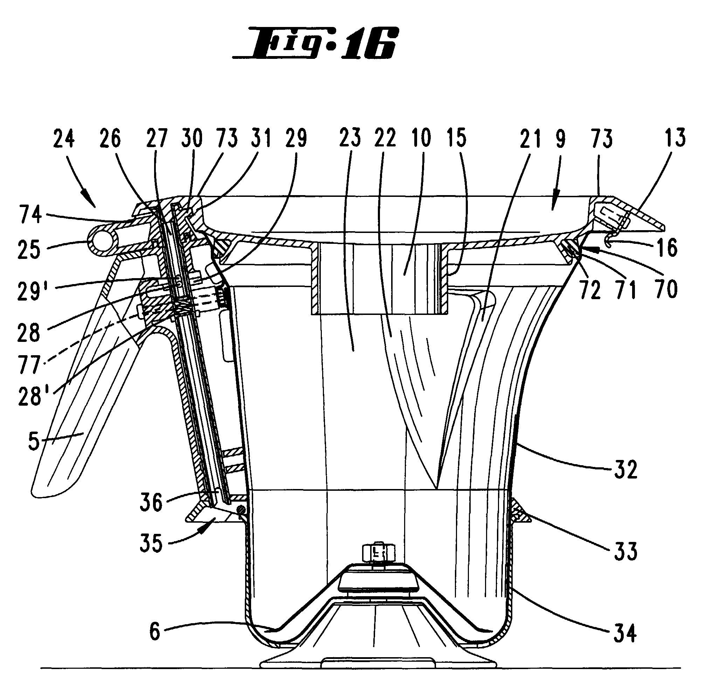

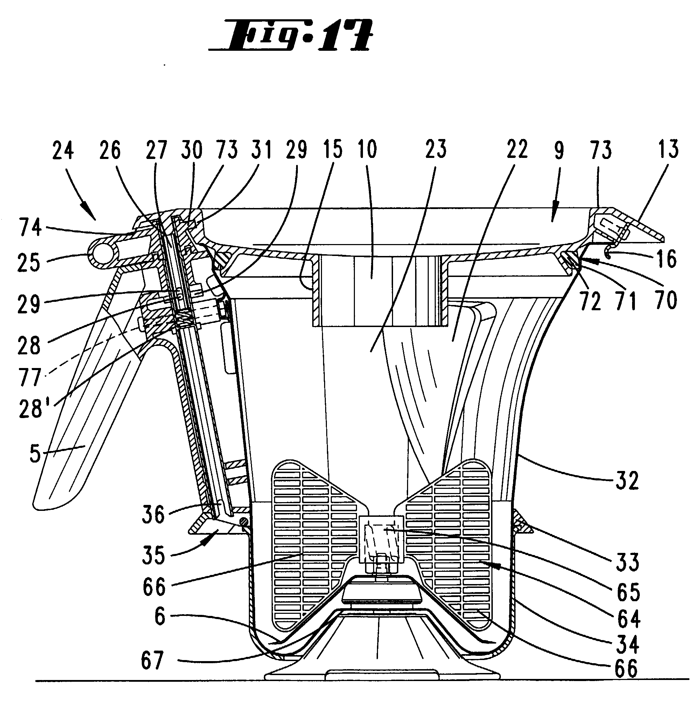

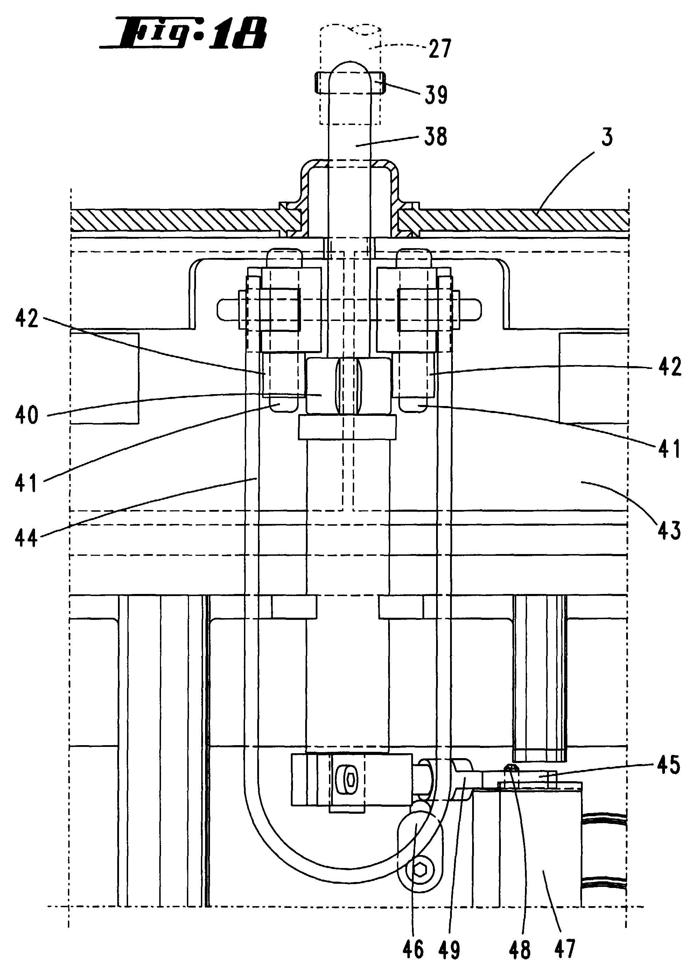

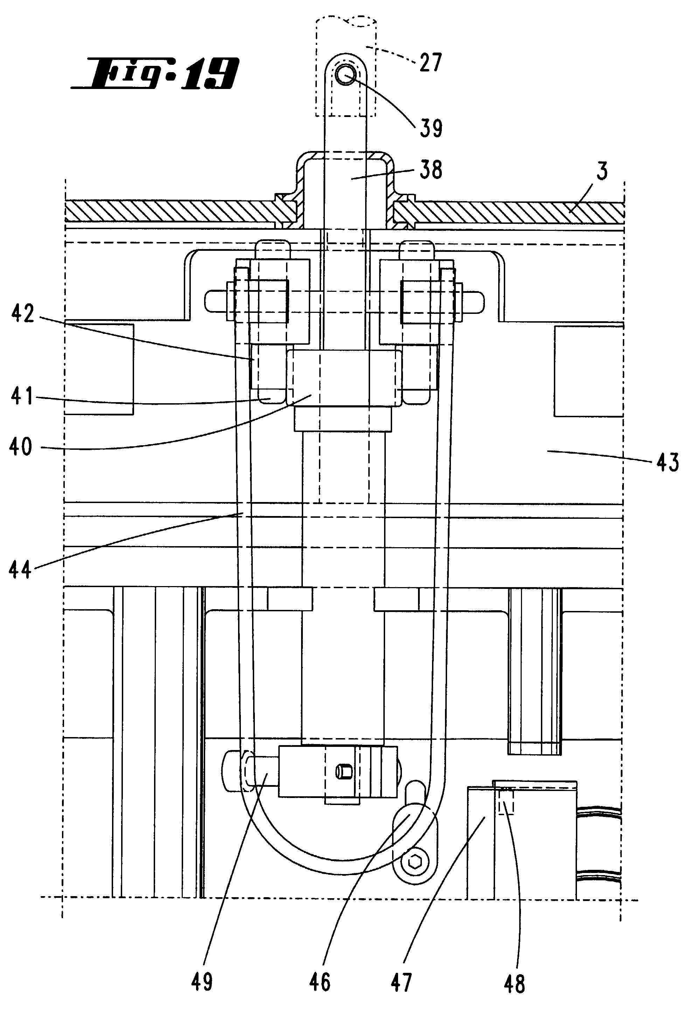

Das Kupplungsteil 38 ist in axialer Verlängerung mit einem Spreizknebel 40 verbunden, dessen unbetätigte bzw. betätigte Stellung in Fig. 19 dargestellt ist. Weiter ist diese betätigte bzw. unbetätigte Stellung auch in den Querschnittsdarstellungen der Fig. 20 bis 23 ersichtlich. Im einzelnen wirkt der Spreizknebel 40 über die Spreizbacken 41 bzw. 42 auf eine Halterungsmanschette 43 ein, welche im entspannten Zustand (vgl. Fig. 22 und 23) das eingesetzte Rührgefäß 4 in dem unteren Bereich a formschlüssig haltert. Im gespreizten Zustand des Spreizknebels 40 (vgl. Fig. 19, 20, und 21) ist die Manschette 43 gegen die Wirkung der U-förmigen Feder 44, welche auf die Spreizbacken 41 bzw. 42 wirkt, vorgespannt.

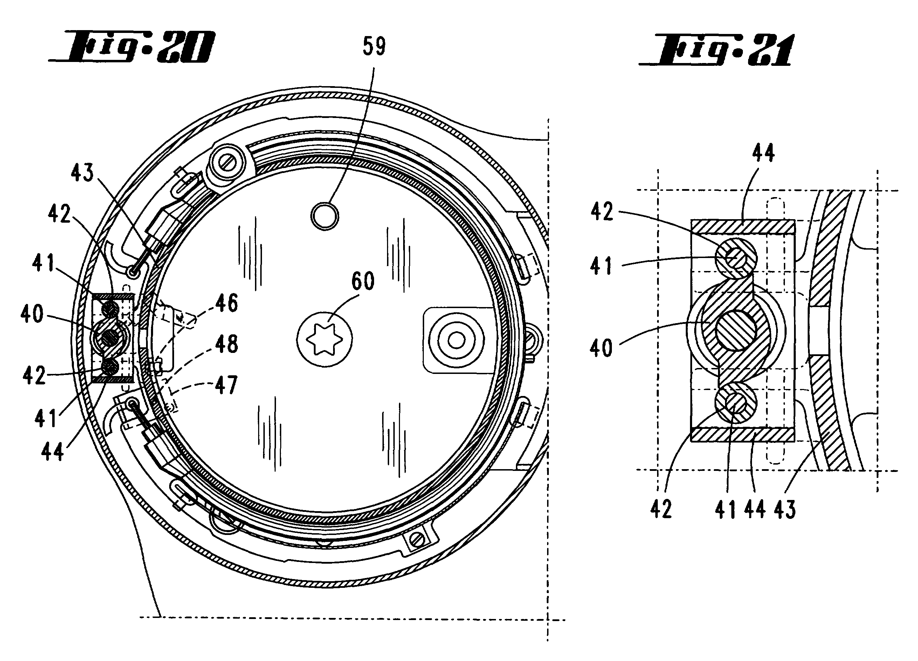

Aus Fig. 18 ist auch ersichtlich, daß an einem unteren Ende des Kupplungsteils 38 ein Sicherungshebel 45 ausgebildet ist, der in den Fig. 24 und 25 in größerer Einzelheit dargestellt ist. Der Sicherungshebel 45 dreht sich mit einer Drehbewegung des Kupplungsteils 38. Er überläuft hierbei einen Kontaktschalter 46 und verfährt in den Bereich einer Platte 47. Das Überlaufen des Kontaktschalters 46 und das Verfahren in dem Bereich der Platte 47 bewirkt weiter, daß ein Sicherungsstift 48 nach oben ausfährt (vgl. auch Fig. 18), welcher mechanisch die Stellung des Sicherungshebels 45 jenseits des Sicherungsstiftes 48 und damit im Bereich der Platte 47 sichert. Ohne ein Zurückfahren des Sicherungsstiftes 48 kann eine Entsicherung und damit eine Entnahme des Rührgefäßes 4 aus der Rührgefäßaufnahme 3 in der Küchenmaschine 1 nicht durchgeführt werden. Hiermit ist auch verbunden, daß erst bei einem Ausfahren des Sicherungsstiftes 48 eine Aktivierung des Rührwerkes bzw. der Heizung freigegeben wird. Entsprechend kann das Rührgefäß 4 nicht herausgenommen werden, ohne daß das Rührwerk und die Heizung deaktiviert ist. Wird mittels des Drehzahlreglers die Küchenmaschine in Betrieb genommen, so fährt der Sicherungsstift 48 aus und verriegelt den Sicherungshebel 45. Dies kann rein mechanisch oder auch elektromechanisch erfolgen. Der Sicherungsstift 48 fährt erst zurück, wenn der Antriebsmotor und damit das Messerwerk 6 zum Stillstand gekommen ist. Erst hiernach kann eine Entriegelung des Rührgefäßdeckels bzw. eine Entnahme des Rührgefäßes 4 aus der Aufnahme 3 erfolgen. Somit ist gewährleistet, daß das Messerwerk 6 vor Öffnen des Rührgefäßes 4 stillsteht. Eine Gefährdung des Benutzers ist somit ausgeschlossen.

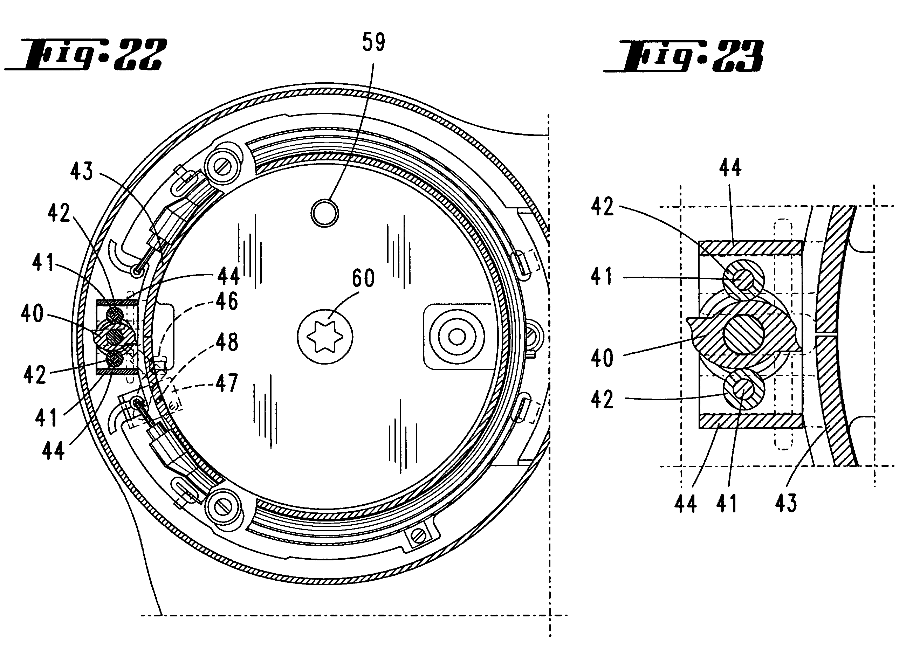

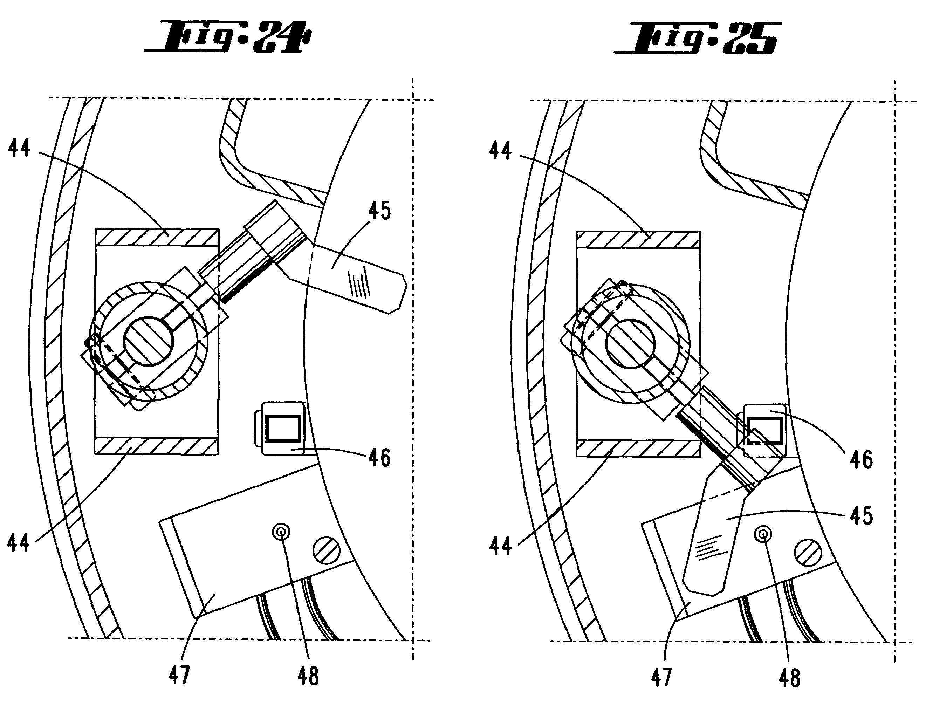

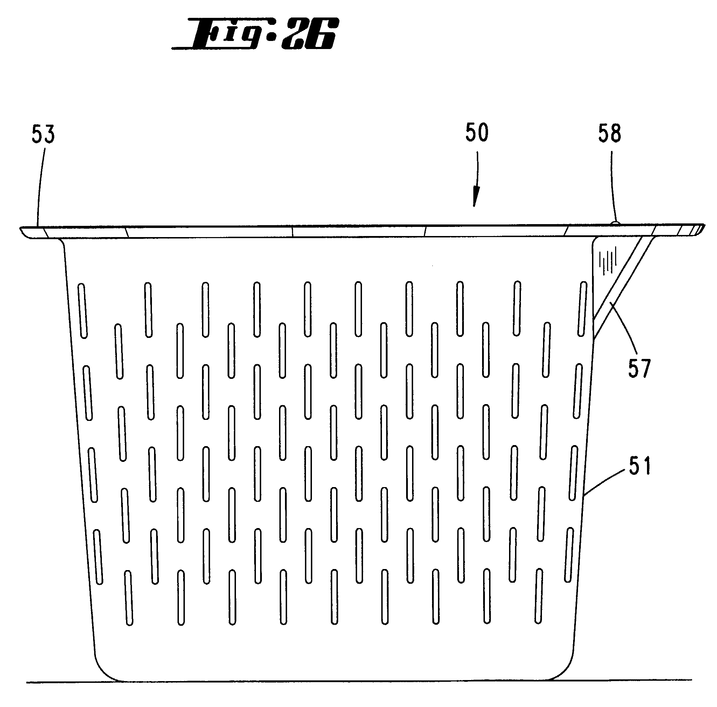

In den Fig. 26 bis 31 ist ein Gareinsatz 50 dargestellt, der insbesondere vorteilhaft ist bei einer Anwendung im Inneren des Rührgefäßes 4 unterhalb des Rührgefäßdeckels 9.

Der Gareinsatz 50 besitzt eine durchlöcherte, im wesentlichen konische oder gegebenenfalls auch zylindrische Seitenwandung 51 und einen durchlöcherten Boden 52. Weiter besitzt er einen oberen umlaufenden Kragen 53, der eine ellipsenartige Grundfläche aufweist. Hierbei ist in vergleichbarer Weise wie bei dem Rührgefäß 4 die ellipsenartige Grundfläche des Kragens 53 gegenüber einem Mittelpunkt des Bodens 52 versetzt. Als Mittelpunkt des Bodens 52 ist der Punkt 54 anzusehen, als geometrischen Mittelpunkt der ellipsenförmigen Gestalt des Kragens 53 der Punkt 55.

Hierdurch ergibt sich, daß der Kragen 53 an einer Seite - vorderseitig - eine größere Ausladung y aufweist als rückwärtig - z. Die Ausladung seitlich - t ist wiederum kleiner als die rückwärtige Ausladung z.

Im vorderen Bereich des Kragens 53 sind gleichfalls schlitzartige Durchbrechungen 56 ausgebildet, welche auch in der konischen Wandung und im Boden ausgebildet sind. Darüber hinaus besitzt der Gareinsatz in seinem vorderen Bereich eine eingeschnittene Ausgußausformung 57, die von einer Querstange 58 übergriffen ist. Die Querstange 58 kann damit ösenartig wirken, zur Lagerungsaufnahme eines Hakens.

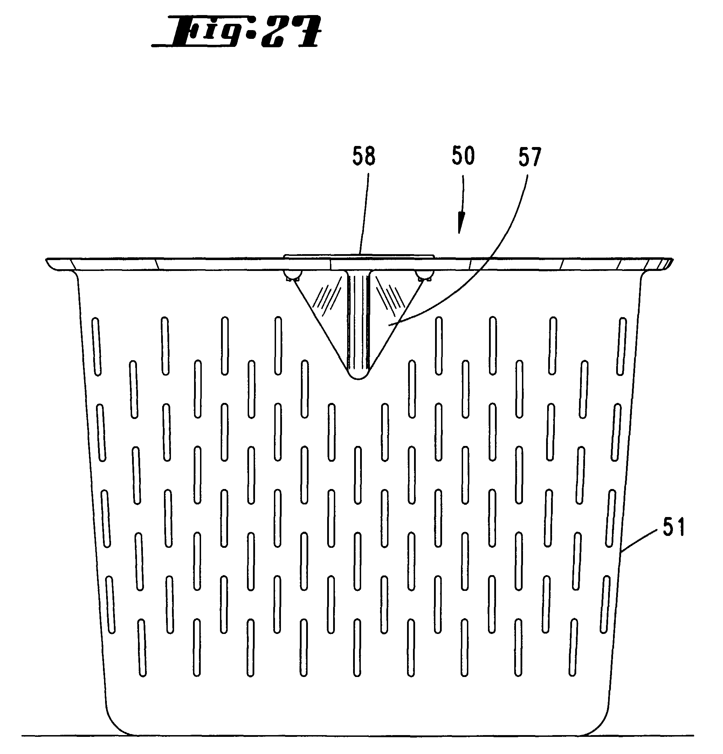

In Fig. 31 ist die Integration des Gareinsatzes in das Rührgefäß dargestellt.

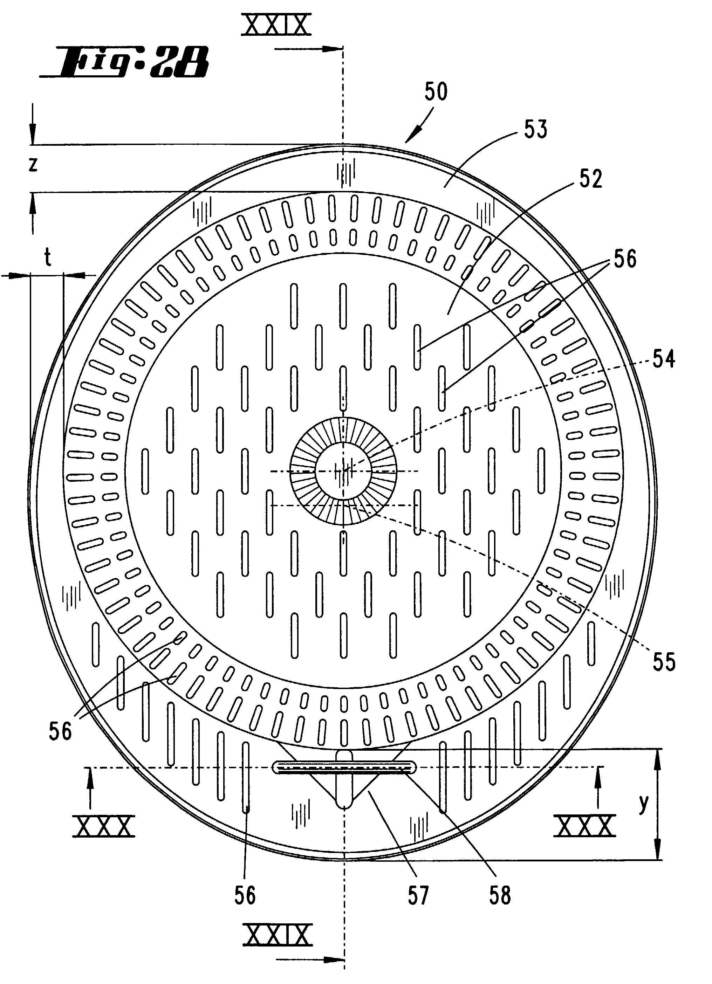

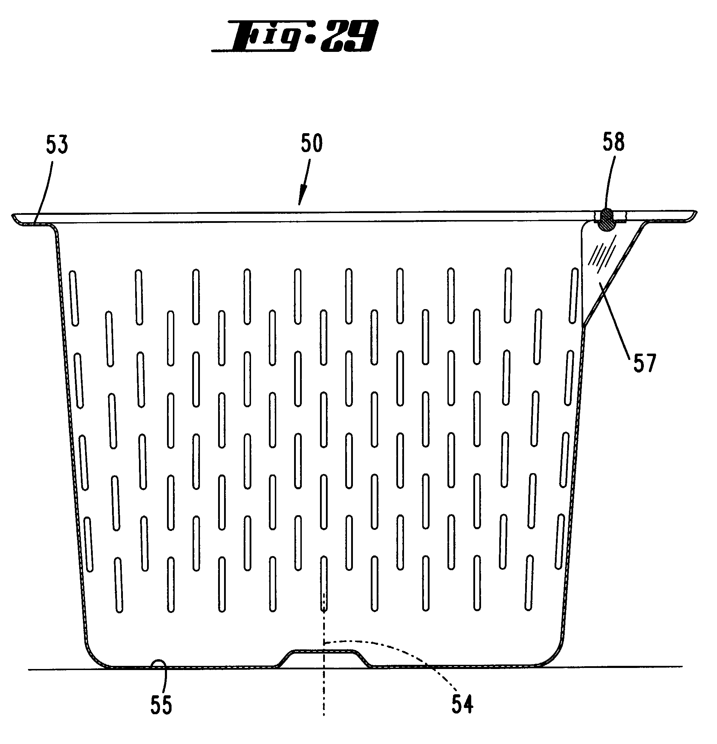

Fig. 32 zeigt eine Draufsicht auf die Rührgefäßaufnahme 3. Diese ist topfartig ausgebildet. In der Rührgefäßaufnahme 3 ist bodenseitig eine Abflußöffnung 59 ausgebildet, zu welcher auch auf Fig. 33 zu verweisen ist. Weiter ist eine sternförmige Kupplungsausnehmung 60 zu erkennen, welche die Motorkraft auf das Rührwerk bzw. den Messersatz 6 überträgt.

In die Kupplungsausnehmung 60 greift der sternförmige Kupplungseinsatz 20 (vgl. Fig. 15) ein. Durch die sternförmig-dreieckige Ausführung der einen Seite der Kupplung und die sternförmig-sechseckige Ausführung der anderen Seite der Kupplung ist die Kupplungsstellung einerseits beim Einsetzen des Rührgefäßes 4 einfach zu erreichen, andererseits ist aber auch eine sichere formschlüssige Kupplungsverbindung gegeben.

Aus der Schnittdarstellung gemäß Fig. 33 ist zu erkennen, daß die Ablauföffnung 59 in eine von einem Boden 61 der Küchenmaschine 1 nach oben ragenden Stutzen 62 eingreift, so daß etwa in die Aufnahme 3 übergelaufene Flüssigkeit oder dgl. durch die Ablauföffnung 59 vollkommen aus der Küchenmaschine 1 herauslaufen kann.

In Fig. 34 ist ein Rührgefäßspachtel 78 dargestellt. Wesentlich an an dem Rührgefäßspachtel 78 ist eine hakenartige Ausformung 79. Diese ist insbesondere geeignet, mit der Öse (Querstange 58) an dem Gareinsatz 50 zusammenzuwirken. Hierdurch kann der Gareinsatz 50 etwa beim Ausschenken von Flüssigkeit in dem Rührgefäß 4 niedergehalten werden.

Das Gefäß kann topfförmiger Gestalt sein.

In der Fig. 17 ist ein in dem Rührgefäß 4 eingesetzter Sahnerührer 64 dargestellt. Letzterer weist zwei radial an eine zylindrische Kupplungsaufnahme 65 angeformte Flügel 66 auf. Die Flügel 66 besitzen regelmäßige Durchbrechungen und weisen zumindest in ihren unteren Bereichen eine dem Rührgefäßboden 67 entsprechende Außenkontur auf. Der Sahnerührer 64 wird mittels seiner Kupplungsaufnahme 65 auf das Messerwerk 6 gesetzt, bspw. auf eine das Messerwerk 6 fixierende Mutter.

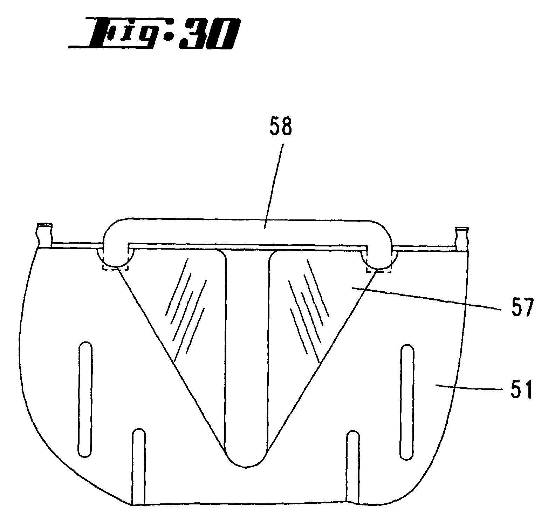

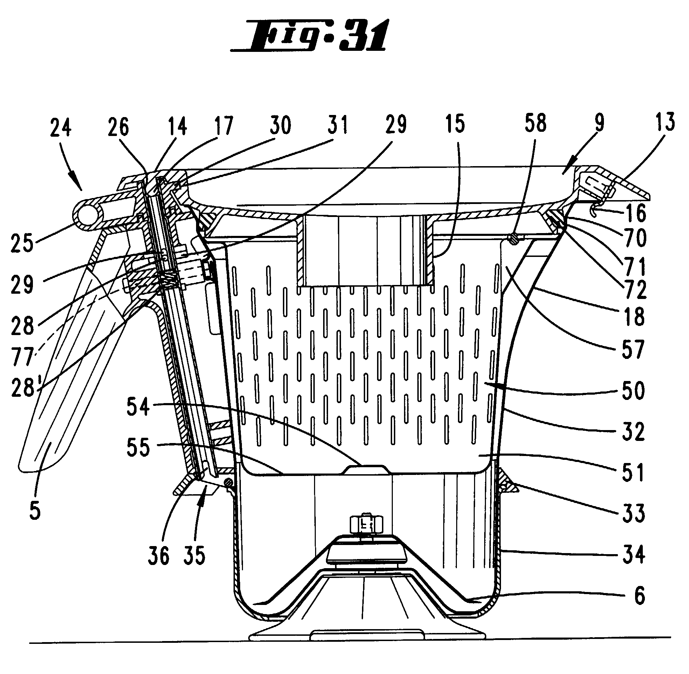

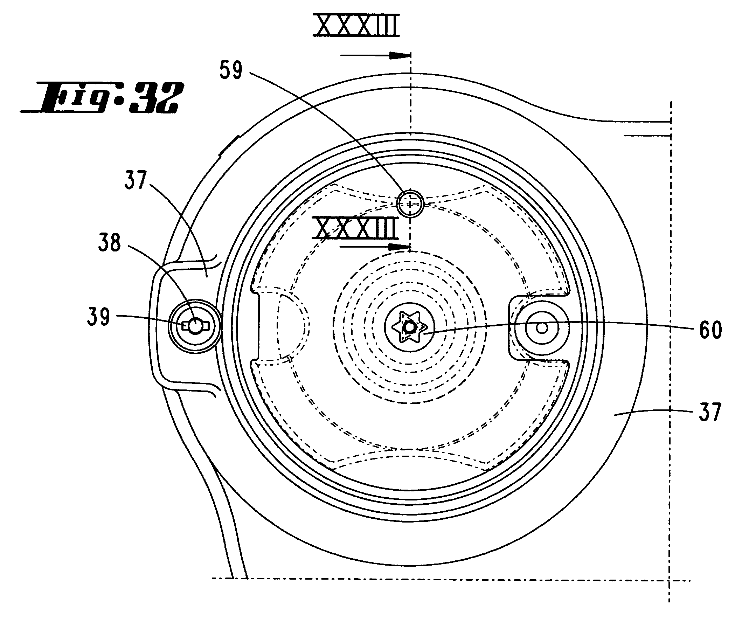

In den Fig. 35 bis 38 ist eine zweite Ausführungsform eines Sahnerührers 80 dargestellt. Dieser weist entsprechend dem ersten Ausführungsbeispiel in der Fig. 17 eine zylindrisch ausgeformte Kupplungsaufnahme 81 auf, von welchem zwei sich gegenüberliegende, radial nach außen erstreckende Rührflügel 82 ausgehen. Diese Rührflügel 82 sind im wesentlichen skelettartig ausgebildet und weisen in ihrem der Aufnahme 81 entfernten Bereichen senkrecht zur Drehachse des Sahnerührers 80 ausgerichtete Stege 83 auf. Letztere sind, wie aus Fig. 36 zu erkennen, winkelversetzt zu einer Horizontalen ausgerichtet, wobei die Stege 83 wechselweise einmal in positiver und einmal in negativer Richtung versetzt zu der Horizontalen ausgerichtet sind.

Oberseitig ist an der Kupplungsaufnahme 81 eine stielförmige Handhabe 84 angeformt, mit Hilfe dessen der Sahnerührer 80 in einfachster Weise in das Rührgefäß 4 bzw. auf das Messerwerk 6 gesetzt bzw. von diesem abgenommen werden kann.

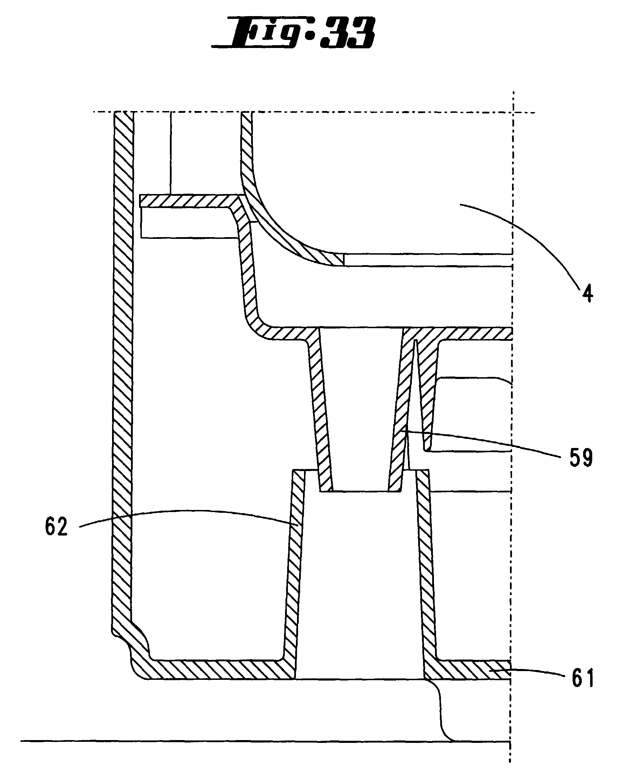

In Fig. 39 ist der eingesetzte Zustand des Sahnerührers 80 in das Rührgefäß 4 dargestellt. Es ist zu erkennen, daß der Sahnerührer 80 mit seiner Kupplungsaufnahme 81 auf einen Mitnehmer 85 des Messerwerkes 6 aufgesteckt ist. Die Anordnung ist hierbei so getroffen, daß die Rührflügel 82 in einem Zwickel des kreuzförmig ausgebildeten Messerwerkes 6 angeordnet sind.

Weiter ist in Fig. 39 eine zweite Ausführungsform der Sicherungseinrichtung 24 dargestellt.

Der auf dem Handgriff 5 aufgesetzte, drehbare Handhebel 25 weist im Querschnitt eine U-förmige Ausgestaltung auf. Mittels dieses Handhebels 25 wird, wie auch im ersten Ausführungsbeispiel, eine Kupplungsstange 86 betätigt. Letztere ist drehfest mit dem Handhebel 25 verbunden und weist einen gekrümmten Verlauf innerhalb des Halterungsgriffes 5 auf. Eine erste Krümmung der Kupplungsstange 86 erfolgt in einem oberen Bereich des Handgriffes 5, wobei die Krümmung im wesentlichen zu einer Mittelachse z des Rührgefäßes 4 hin verläuft. Eine weitere, zweite Krümmung der Kupplungsstange erfolgt im unteren Bereich des Handgriffes 5 vor Austritt der Kupplungsstange 86 aus dem Handgriff 5, um die Kupplungsstange 86 wieder in eine vertikale Position zu bringen. Bedingt durch diese Ausgestaltung ist es ermöglicht, den Handgriff 5 bzw. den Handhabungsbereich derart in Richtung auf die Mittelachse z des Rührgefäßes 4 zu verlagern, daß bei gefülltem Rührgefäß 4 die Hebelkräfte gering gehalten werden.

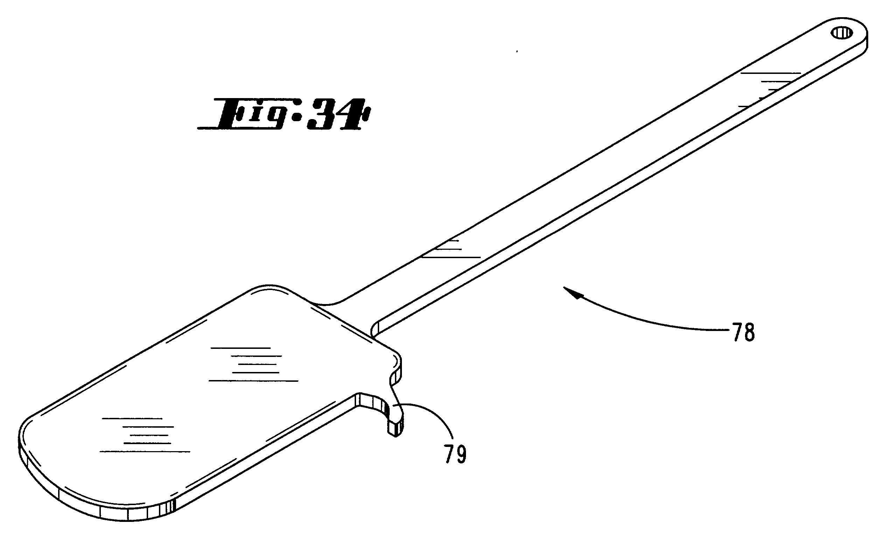

Die Kupplungsstange 86 durchtritt die Handhabe 5 im Bereich einer Öffnung 87. Das unterseitig aus dem Handgriff 5 hervorragende Kupplungsende 88 ist hammerkopfartig ausgebildet. Die Öffnung 87 weist eine dem Hammerkopf entsprechende Kontur auf (vergl. Fig. 41).

In dem dem Handhebel 25 zugeordneten Bereich der Kupplungsstange 86 ist dieser drehfest ein Sicherungsstift 89 zugeordnet, welcher in diesem Bereich parallel, jedoch radial versetzt zu der Kupplungsstange 86 ausgerichtet ist. Der Sicherungsstift 89 ist mittels einer Feder 90 an der Kupplungsstange 86 befestigt. Diese Feder 90 beaufschlagt den Sicherungsstift stets in Richtung auf den Handhebel 25 bzw. auf die dort angeordnete Handgriffdecke 91. Weiter ist der Sicherungsstift 89 an einer an der Kupplungsstange 86 drehfest angeordneten Scheibe 92 gehaltert, welche eine Bohrung 93 zum Durchtritt des Sicherungsstiftes 89 aufweist.

In der Ausschnittsdarstellung in Fig. 39a ist die Sperrstellung der Sicherungseinrichtung 24 dargestellt. Es ist zu erkennen, daß der Sicherungsstift 89 mittels der Feder 90 durch die Bohrung 93 der Scheibe 92 in eine Sperröffnung 94 der Handgriffdecke 91 eintritt. Diese Sperröffnung 94 ist nach oben hin, das heißt in Richtung auf den Handhebel 25 offen ausgebildet. Der aufzusetzende Rührgefäßdeckel 9 besitzt einen nach unten weisenden Zapfen 95, welcher in aufgesetztem Zustand des Deckels 9 von oben in die Sperröffnung 94 tritt. Hierdurch erfolgt eine Verlagerung des Sicherungsstiftes 89 in eine entsperrte Stellung gemäß der Fig. 39. Hiernach kann ein Verschwenken des Handhebels 25 erfolgen. Ein Verdrehen bzw. Verschwenken des Handhebels 25 hat eine entsprechende Verschwenkung des hammerkopfartigen Kupplungsendes 88 zur Folge. Bevorzugt ist hierbei eine Verschwenkung um ca. 67°.

Dieser Aufbau erweist sich als besonders vorteilhaft, da keine Relativbewegungen zwischen den Betätigungselementen besteht und damit verschleißfrei ist. Die gesamte Sicherungseinrichtung 24 kann in einfachster Weise aus dem Handgriff 5 entnommen bzw. wiederum in diesen eingesetzt werden. Die gesamte Einrichtung ist an der genannten Handgriffdecke 91 befestigt, welche wiederum an dem Handgriff 5 befestigbar ist, dies bspw. mittels einer Hintergriffbefestigung und einer Fixierschraube 96.

In den Fig. 40, 40a und 40b ist eine dritte Ausführungsform der Sicherungseinrichtung 24 dargestellt. In dem dem Handhebel 25 zugeordneten Bereich der Kupplungsstange 86 ist dieser unterhalb der Handgriffdecke 91 ein Verriegelungsvorsprung 150 angeformt, welcher in einer Sperrstellung gemäß den Fig. 40a und 40b in Richtung auf die Mittelachse z des Rührgefäßes 4 weist. Dieser Verriegelungsvorsprung 150 liegt in der Sperrstellung in einer Blockierungstasche 151 einer Verriegelungskulisse 152 ein. Letztere setzt sich im wesentlichen aus einer senkrecht zur Kupplungsstange 86 ausgerichteten, die Blockierungstasche 151 aufweisenden Platte und einem von dieser Platte ausgehenden, abgewinkelten Schenkel zusammen. Über letzteren ist die Verriegelungskulisse 152 unterseitig an der Handgriffdecke 91 über einen Zapfen 153 schwenkbeweglich gelagert. Mittig besitzt die Platte 154 eine Bohrung 155 zum Durchtritt der Kupplungsstange 86. Von dieser Bohrung 155 geht die radial ausgerichtete Blockierungstasche 151 an der der Handgriffdecke 91 zugewandten Seite aus.

An der der Blockierungstasche 151 abgewandten Seite der Bohrung 155 ist eine weitere Durchbrechung 156 vorgesehen, durch welche ein handgriffdeckenseitiger Bolzen 157 tritt. Dieser ist im Bereich seines freien Endes mit einem Ringkragen versehen, auf welchem eine den Bolzen 157 umgreifende Druckfeder 158 gelagert ist. Letztere beaufschlagt mit ihrem dem Ringkragen abgewandten Ende die Unterseite der Verriegelungskulisse 152, so daß letztere in Richtung auf die Unterseite der Handgriffdecke 91 federbelastet ist. Dies bedeutet, daß die Verriegelungskulisse 152 stets in Richtung auf eine den Verriegelungsvorsprung 150 sperrende Stellung vorgespannt ist.

Wie aus den Fig. 40a und 40b zu erkennen, kann in dieser Stellung kein Verdrehen der Kupplungsstange 86 mittels des Handhebels 25 erfolgen, dies dadurch bedingt, daß der Verriegelungsvorsprung 150 in der Blokkierungstasche 151 einliegt, welche eben diese Verdrehung verhindert.

Um ein Verdrehen der Kupplungsstange 86 zu ermöglichen, muß der Rührgefäßdeckel 9 aufgesetzt werden. Letzterer ist im Bereich seiner Vorsprungshalterung 14 unterseitig mit zwei Betätigungsvorsprüngen 159 versehen, welche bei einem Aufsetzen des Rührgefäßdeckels 9 durch entsprechende Bohrungen 160 im Bereich der Handgriffdekke 91 treten und die Verriegelungskulisse 152 beaufschlagen. Hierdurch wird die Verriegelungskulisse 152 um den Zapfen 153 entgegen der Federkraft der Druckfeder 158 verschwenkt, so daß die Blockierungstasche 151 den Verriegelungsvorsprung 150 zur Verdrehung freigibt (vergl. Fig. 40). Entgegen den zuvor beschriebenen Ausführungsbeispielen wird hier nicht der Sicherungsstift bzw. der Verriegelungsvorsprung in eine Drehfreigabe verlagert, sondern vielmehr die den Verriegelungsvorsprung sperrende Verriegelungskulisse.

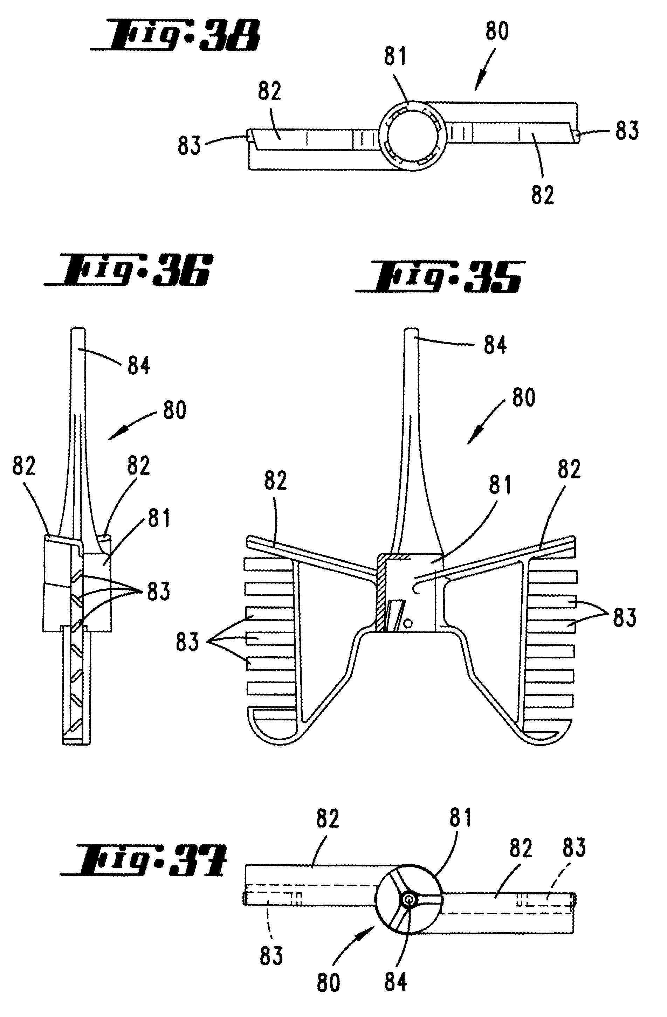

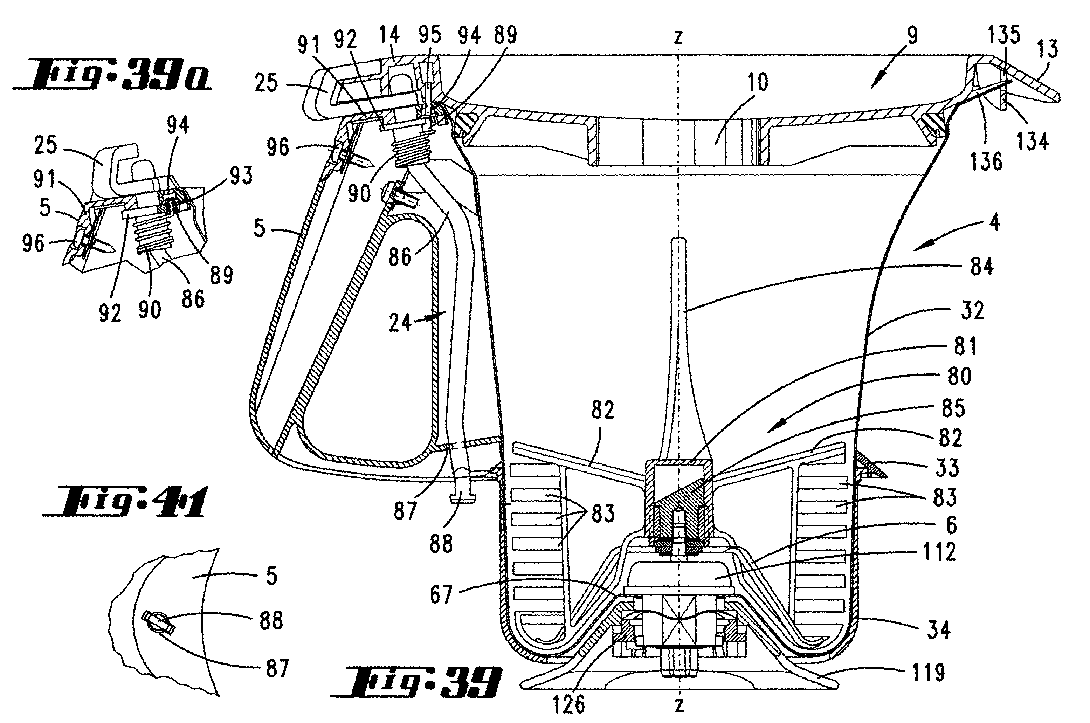

Wie auch schon im ersten Ausführungsbeispiel wirkt die Kupplungsstange 86 bzw. dessen Kupplungsende 88 bei eingesetztem Rührgefäß 4 in die Rührgefäßaufnahme 3 auf ein Kupplungsteil 38 ein. In den Fig. 42 und 43 ist dieses Kupplungsteil 38 in einer zweiten Ausführungsform näher dargestellt.

Es ist zu erkennen, daß das Kupplungsteil 38 aus einer auf einer Nockenwelle 97 oberseitig aufgeschobenen Kupplungshülse 98 besteht, wobei die Kupplungshülse 98 gegen eine Feder 99 auf der Nockenwelle 97 vertikal verschiebbar ist. Kupplungshülse 98 und Nockenwelle 97 sind unabhängig von der vertikalen Verschiebestellung der Kupplungshülse 98 stets formschlüssig miteinander verbunden, so daß Drehbewegungen der Kupplungshülse 98 auf die Nockenwelle 97 übertragen werden. Die Nockenwelle 97 trägt, wie im ersten Ausführungsbeispiel, einen Spreizknebel 40 zum Aufspreizen zweier Spreizbakken 41 und 42 einer Halterungsmanschette 43.

Die Kupplungshülse 98 weist in ihrem oberen Bereich einen umlaufenden Rand 100 auf. Zur formschlüssigen Kupplung mit dem Kupplungsende 88 der Kupplungsstange 86 besitzt die Kupplungshülse 98 eine oberseitig angeordnete schlitzartige Aufnahme 101. Auf den umlaufenden Rand 100 ist eine Blockiermanschette 102 aufgerastet, welche eine dem Querschnitt des hammerkopfartigen Kupplungsendes 88 entsprechende, schlüssellochartige Durchtrittsöffnung 103 besitzt. Die Blockiermanschette 102 ist bevorzugt als Kunststoffspritzteil ausgeformt und bildet oberseitig eine kegelstumpfartige Dichtwulst 104 aus.

Die Blockiermanschette 102 weist zwei radial ausgerichtete Backenpaare 105 auf, zwischen welchen Backenpaaren 105 gehäuseseitig befestigte Zapfen 106 greifen (siehe Fig. 43). Diese Anordnung verhindert ein Verdrehen der Blockiermanschette 102, läßt jedoch eine Vertikalbewegung der Blockiermanschette 102 zu.

Das hammerkopfartige Kupplungsende 88 durchtritt das Gehäuse 107 der Küchenmaschine 1 im Bereich einer kreisförmigen Durchtrittsöffnung 108, welche unterseitig, das heißt der Blockiermanschette 102 zugewandt, eine entsprechend der Dichtwulst 104 kegelstumpfförmig ausgebildete Kontur aufweist.

Bei Einsetzen des Rührgefäßes 4 in die Rührgefäßaufnahme 3 tritt das Kupplungsende 88 durch die Durchtrittsöffnung 108 des Gehäuses 107 und hiernach durch die schlüssellochartige Öffnung 103 der Blockiermanschette 102 bis das Kupplungsende 88 in dem Aufnahmeschlitz 101 der Kupplungshülse 98 einliegt. Hiernach erfolgt eine Vertikalverschiebung der Kupplungshülse 98 mitsamt der Blockiermanschette 102 entgegen dem Druck der Feder 99, wobei Kupplungshülse 98 und Blockiermanschette 102 von der Gehäusedurchtrittsöffnung 108 wegbewegt werden. Nach vollständigem Einsetzen des Rührgefäßes 4 in die Aufnahme 3 erfolgt das zuvor beschriebene Verschwenken des Handhebels 25, was ein Verdrehen der Kupplungsstange 86 und damit des Kupplungsendes 88 zur Folge hat. Dieses Verdrehen bewirkt ebenfalls bedingt durch den Formschluß ein Verdrehen der Kupplungshülse 98 und damit einhergehend ein Verdrehen der Nockenwelle 97 in die das Rührgefäß 4 einspannende Lage. Die Blockiermanschette 102 vollzieht die Vertikalbewegung mit, dreht jedoch nicht mit. Die Blockiermanschettenöffnung 103 und das hammerkopfartige Kupplungsende 88 sind in dieser Stellung versetzt zueinander ausgerichtet (vergl. Fig. 43). Das Kupplungsende 88 ist demnach in dieser Stellung in vertikaler Richtung gefangen.

Will der Benutzer das Rührgefäß 4 entnehmen, so ist zuvor eine Zurückverlagerung mittels des Handhebels 25 in die Grundstellung zwingend notwendig, damit der Aufnahmeschlitz 101 und die Schlüssellochöffnung 103 bzw. das Kupplungsende 88 und die Schlüssellochöffnung 103 in Überdeckung gebracht werden. Erst hiernach ist das hammerkopfartige Kupplungsende 88 vertikal aus dem Kupplungsteil 38 herausziehbar. Es besteht somit nicht die Gefahr, daß der Benutzer die Halterungsmanschette 43 gerade so weit spreizt, daß das Rührgefäß 4 zwar entnommen werden kann, die Halterungsmanschette 43 jedoch noch nicht in ihrer Endstellung einrastet. Bei einem Herausnehmen des Rührgefäßes 4 würde dann das Kupplungsende 88 aus dem Kupplungsteil 38 gezogen, so daß die U-Feder 44 die Halterungsmanschette 43 wiederum zugreifen läßt und das Rührgefäß 4 einklemmt. Da die Kupplung in dieser Stellung bereits außer Eingriff gebracht wäre, könnte der Benutzer das Rührgefäß 4 nicht mehr entnehmen. Diese Fehlbedienung wird durch die angegebene Erfindung vermieden, da die Kupplungsstange 86 erst in einer Anschlagposition, in welcher die Schlitze und Öffnungen von Blockiermanschette 102 und Kupplungshülse 98 in Übereinanderstellung liegen, herausgezogen werden kann.

In der in Fig. 42 gezeigten Verriegelungsstellung ist die Dichtung im Bereich der Gehäusedurchtrittsöffnung 108 deaktiviert. Diese kommt erst bei entnommenem Rührgefäß 4 zur Wirkung. Hierbei dichtet die Blockiermanschette 102 mittels ihrer Dichtwulst 104 im Bereich der Gehäusedurchtrittsöffnung 108 diese ab. Die Kegel der Dichtwulst 104 und der Öffnung 108 fügen sich ineinander und dichten somit wirkungsvoll ab. Der als Mitnehmertasche ausgebildete Aufnahmeschlitz 101 der Kupplungshülse 98 ist nach untenhin geschlossen, so daß auch dort kein Wasser oder dergleichen eindringen kann.

Weiterhin erweist es sich hierbei als vorteilhaft, daß bei eingesetztem Rührgefäß 4 das Kupplungsteil 38 und auch das durch das Gehäuse 107 tretende Kupplungsende 88 nicht mit dem Gehäuse 107 in Kontakt treten. Fertigungstoleranzen in vertikaler Richtung werden ausgeglichen, indem das Kupplungsteil 38 in das Gehäuse 107 eintaucht. Toleranzen in horizontaler Richtung führen zu keiner Berührung von Kupplungsstange 86 und Gehäuse 107, da die Durchtrittsöffnung 108 wesentlich größer ausgebildet ist als der Durchmesser der Kupplungsstange 86. Weiterhin wird durch die Entkopplung des Kupplungsteiles 38 von Gehäuse 107 das Wiegeergebnis nicht beeinflußt.

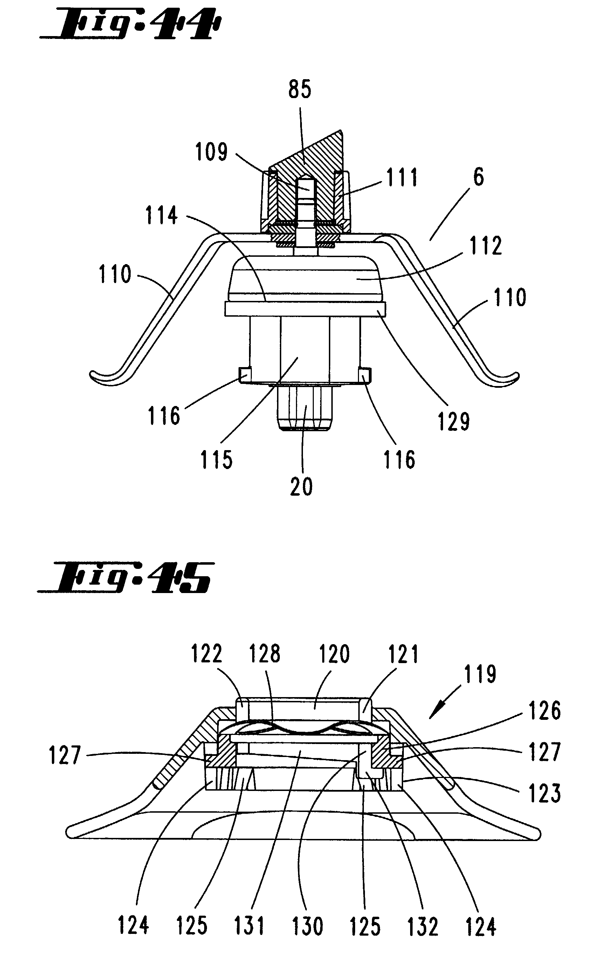

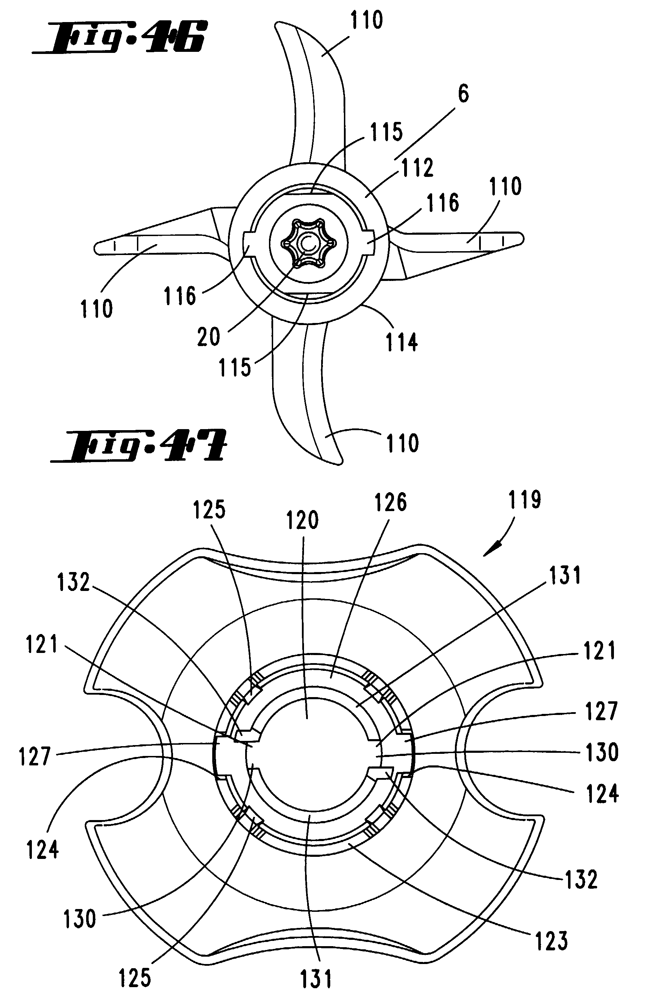

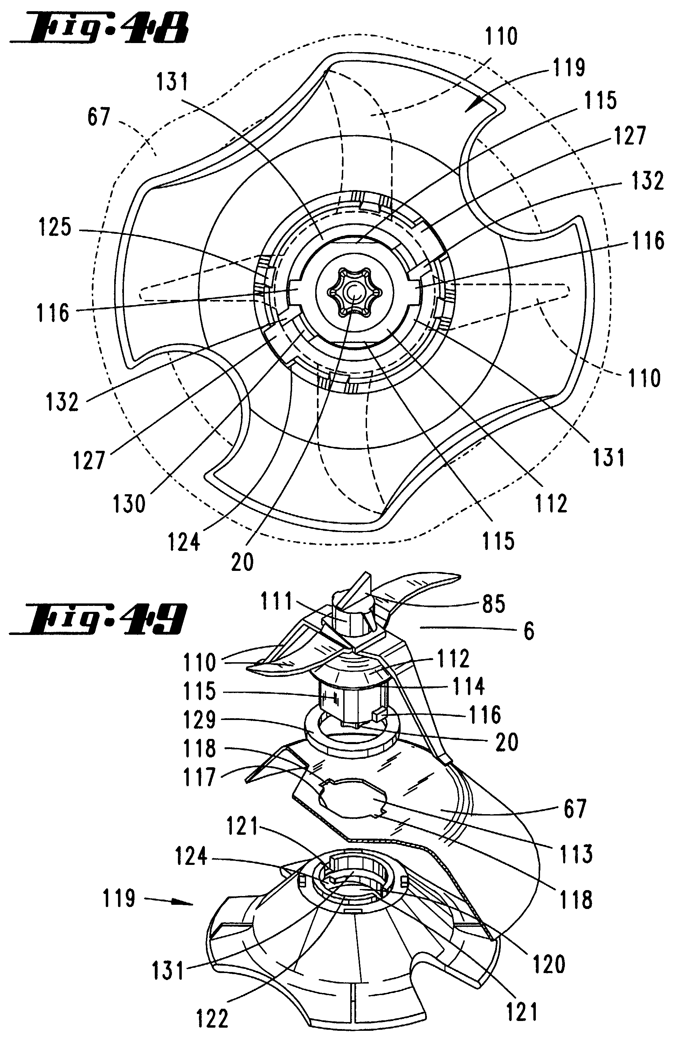

In den Fig. 44 bis 49 sind in Einzel- und Zusammenbau-Darstellungen eine zweite Ausführungsform der Messerwerkbefestigung dargestellt.

Der Messersatz 6 setzt sich im wesentlichen aus vier radial um eine Antriebswelle 109 angeordnete, jeweils untereinander einen Winkel von 90° einschließenden Messern 110 zusammen, wobei zwei sich gegenüberliegende Messer 110, von der Antriebswelle 109 ausgehend, zunächst senkrecht zur Antriebswelle 109 und anschließend gekrümmt nach unten hin, in Einbaustellung in Richtung auf den Rührgefäßboden 67 hin verlaufen. Die beiden anderen Messer 110 verlaufen im wesentlichen in horizontaler Richtung. Die Messer 110 bzw. der Messersatz 6 ist mittels eines Schraubkörpers 111 an der Antriebswelle 109 befestigt. Der Schraubkörper 111 trägt weiterhin oberseitig den bereits erwähnten Mitnehmer 85.

Die Antriebswelle 109 ist in einem Messerlager 112 drehbar gelagert und setzt sich unterseitig des Messerlagers 112 in dem bereits erwähnten Kupplungseinsatz 20 fort.

Der Messersatz 6 ist mit dem Messerlager 112 betrieblich nicht lösbar verbunden. Diese Baueinheit wird von oben in das Rührgefäß 4 eingesetzt, wobei das Messerlager 112 den Rührgefäßboden 67 im Bereich einer entsprechend ausgeformten Halteöffnung 113 durchtritt. Das Messerlager 112 weist zur Auflage auf den Randbereich der Halteöffnung 113 eine Stützschulter 114 auf. Das einen im wesentlichen kreisrunden Grundriß aufweisende Messerlager 112 besitzt in dem unterhalb der Stützschulter 114 angeordneten Bereich, welcher querschnittsverjüngt ausgebildet ist, zwei sich diametral gegenüberliegende Abflachungen 115. Um 90° zu diesen Abflachungen 115 versetzt sind nach außen weisende Zapfen 116 vorgesehen.

Die Halteöffnung 113 des Rührgefäßbodens 67 weist eine entsprechende Kontur auf. Es sind also auch hier abgeflachte Öffnungsbereiche 117 und Durchtrittsbereiche 118 für die Zapfen 116 vorgesehen.

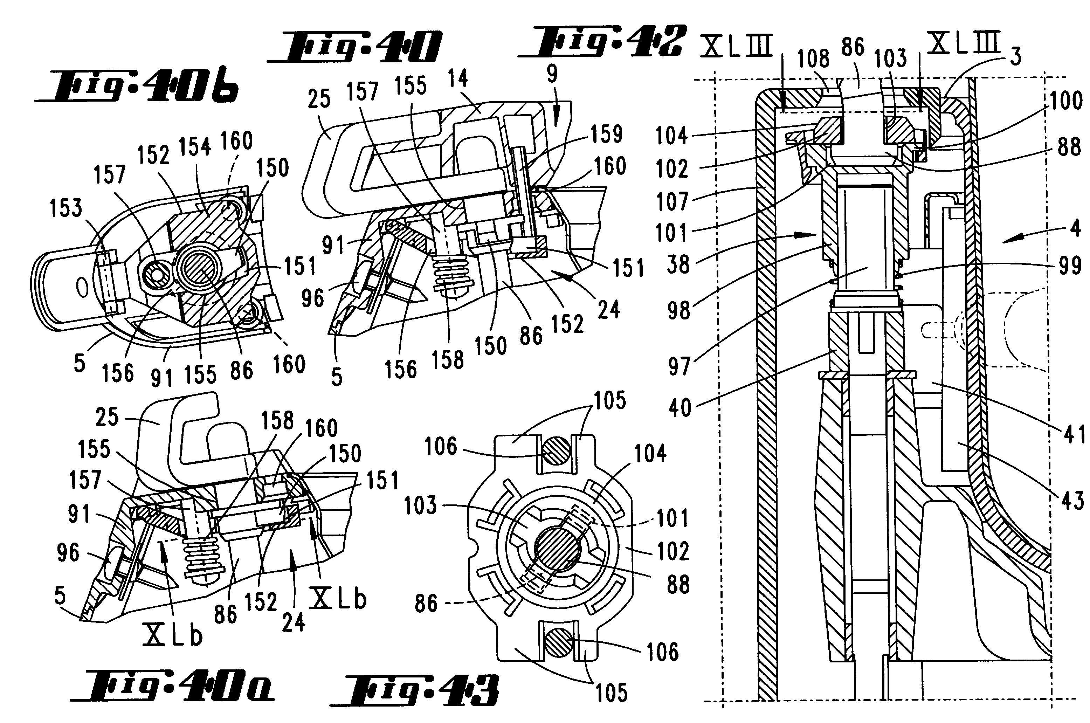

In Fig. 45 ist in einem Schnitt ein Standfuß 119 dargestellt. Dieser Standfuß 119 ist bevorzugt ein Kunststoffteil. Die Außenkontur des Standfußes 119 entspricht im wesentlichen der Ausformung im Bereich des Rührgefäßbodens 67.

Der Standfuß 119 weist eine mittige, kreisrund ausgebildete Durchtrittsöffnung 120 auf, welche in zwei sich gegenüberliegenden Bereichen sich radial nach außen erstreckende Durchbrechungen 121 besitzt. Oberseitig wird die Durchtrittsöffnung 120 von einem Kragen 122 umfaßt. Unterseitig ist die Durchtrittsöffnung 120 mit einer nach unten weisenden, gegenüber der Durchtrittsöffnung 120 durchmessergrößeren Wandung 122 versehen. Letztere besitzt zwei sich gegenüberliegende, randoffene Ausnehmungen 124. Die zwischen diesen Ausnehmungen 124 verbleibenden Restwandbereiche weisen nach innen ragende Rastnasen 125 auf.

Diese Rastnasen 125 halten einen Halterungsring 126, welcher, in vertikaler Richtung betrachtet, zwischen den Rastnasen 125 und der Unterseite der Durchtrittsöffnung 120 gelagert ist. Der Halterungsring 126 ist drehfest gehalten, dies bedingt dadurch, daß der Halterungsring 126 außenwandig zwei sich gegenüberliegende Vorsprünge 127 aufweist, welche in die erwähnten Ausnehmungen 124 der Wandung 123 eingreifen. Eine im Bereich zwischen dem Halterungsring 126 und der Unterseite der Durchtrittsöffnung 120 angeordnete Wellfeder 128 beaufschlagt den Halterungsring 126 in Richtung auf die Rastnasen 125.

Wie bereits erwähnt, wird das Messerlager 112 mitsamt dem Messerwerk 6 durch die Halteöffnung 113 des Rührgefäßbodens 67 gesteckt, wobei hiernach das Messerlager 112 bedingt durch die abgeflachten Ausgestaltungen nicht mehr drehbar ist. Zwischen der Stützschulter 114 und dem Rührgefäßboden 67 ist ein Dichtring 129 vorgesehen, welcher axial zwischen dem Messerlager 112 und dem Rührtopf 4 abdichtet, damit keine Flüssigkeit aus dem Rührgefäß 4 austreten kann. Zur Befestigung des Messerlagers 112 an dem Rührgefäßboden 67 wird hiernach der Standfuß 19 derart von unten gegen das Messerlager 112 gesetzt, daß die Zapfen 116 durch die Durchbrechungen 121 im Bereich der Durchtrittsöffnung 120 treten. Der Halterungsring 126 besitzt entsprechend ausgebildete Ausnehmungen 130. Die Zapfen 116 hintergreifen bei einer Verdrehung des Standfußes 119 um ca. 180° entsprechend ausgebildete, ringförmige Schultern 131, welche Auflaufschrägen ausbilden. Am Ende jeder Auflaufschräge ist ein Anschlagnocken 132 vorgesehen.

Die Dichtung 129 erhält eine definierte Vorspannung durch den Standfuß 119, welcher an den zwei seitlich vorstehenden Zapfen 116 des Messerlagers 112 dieses nach unten gegen den Rührgefäßboden 67 drückt. Der Standfuß 119 stützt sich dabei gegen die Unterseite des Rührgefäßbodens 67 ab. Um die Andrückkraft nahezu toleranzunabhängig zu machen, ist in dem Standfuß 119 der sich aus dem Halterungsring 126 und der Wellfeder 128 zusammensetzende, federvorgespannte Rastring befestigt. Dieser hat den formschlüssigen Kontakt zu den Zapfen 116 an dem Messerlager 112.

Um eine verbesserte Abstützung des Messerlagers 112 an dem Rührgefäßboden 67 zu bilden, kann auch vorgesehen sein, daß das Messerlager 112 einen Radialbund besitzt, mit welchem das Messerlager 112 starr auf dem Rührgefäßboden 67 aufliegt. Die Vorspannung der Dichtung 129 hängt in diesem Fall vom Höhenmaß des Bundes ab.

Der Standfuß 119 ist, wie bereits erwähnt, aus Kunststoff hergestellt und dient gleichzeitig als Aufstellfläche des Rührgefäßes 4. Die Temperatur des Standfußes 119 ist in allen Fällen erheblich geringer als die des Rührtopfes 4, so daß die Möglichkeit gegeben ist, den heißen Rührtopf 4 auch auf nicht hitzebeständigen Oberflächen, wie z. B. Holz, zu positionieren.

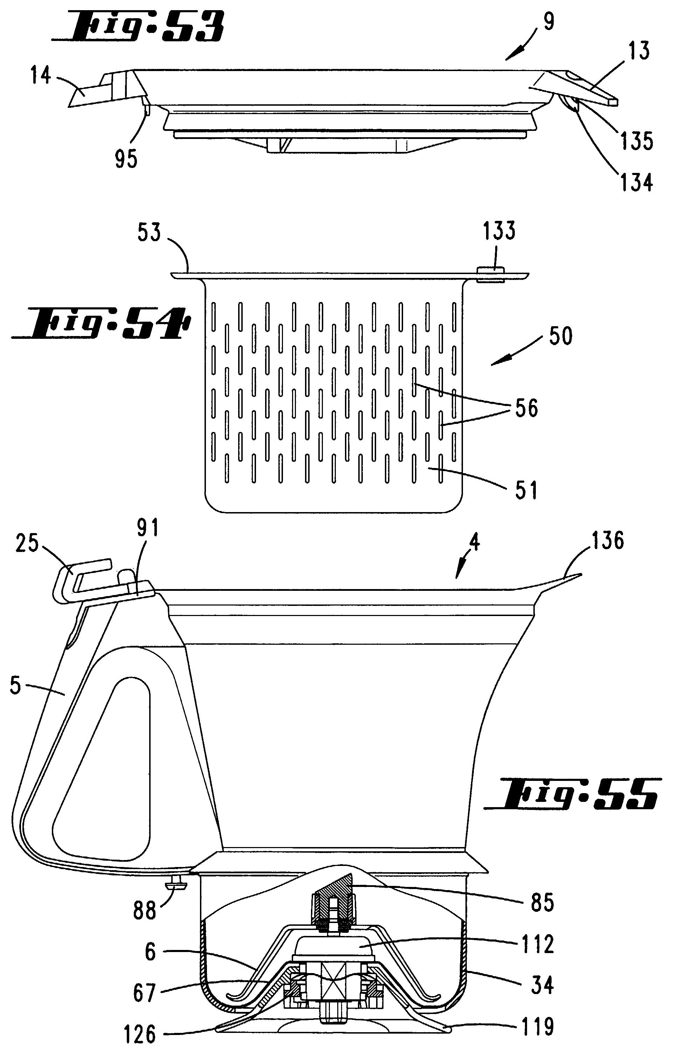

In den Fig. 50 bis 52 ist ein Gareinsatz 50 in einer zweiten Ausführungsform dargestellt. Dieser unterscheidet sich im wesentlichen von dem in den Fig. 26 bis 31 gezeigten ersten Ausführungsbeispiel in der ösenartigen Ausgestaltung zur Lagerungsaufnahme eines Hakens.

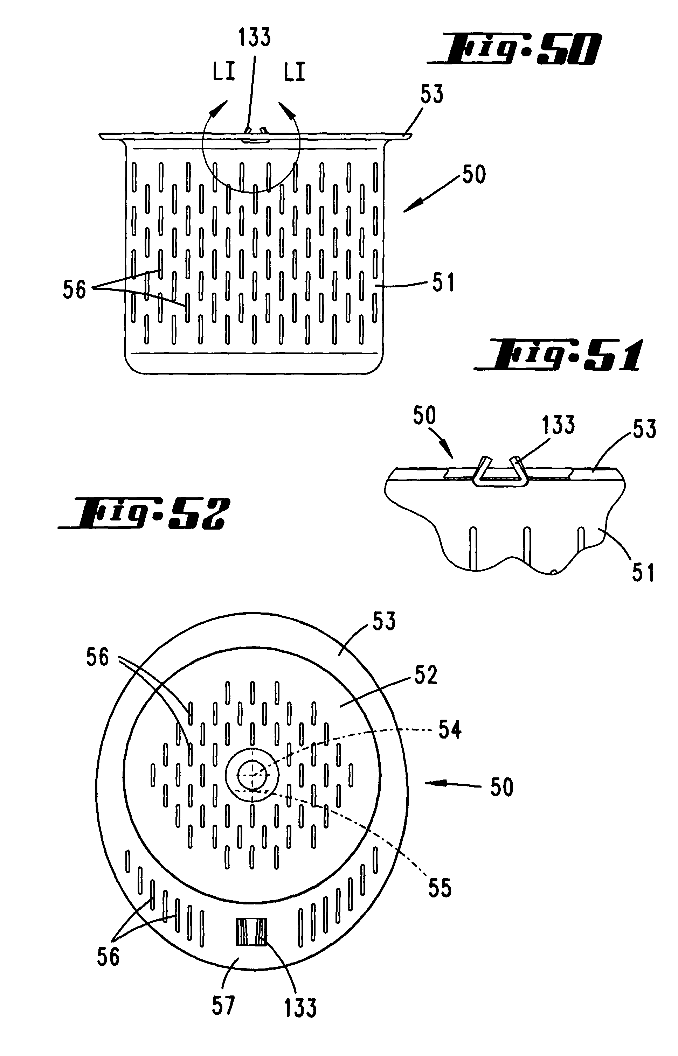

Wie insbesondere aus dem Teilschnitt der Fig. 51 ersichtlich, ist hier eine schwalbenschwanzförmige Aufnahmeöse 133 vorgesehen, welche als Blechteil im Bereich der Ausgußformung 57 angeordnet ist. Die Aufnahmeöse 33 ist nach oben hin offen ausgebildet.

Die Durchbrechungen 56 des Gareinsatzes 50 dienen unter anderem dazu, daß Speisen, wie z. B. Reis, mit kochendem Wasser umspült werden. Weiter werden beim Ausschenken von Flüssigkeiten darin enthaltene feste Bestandteile von dem Gareinsatz 50 zurückgehalten.

Wird der Gareinsatz 50 vor dem Zerkleinern von z. B. Früchten mit in den Rührtopf 4 eingesetzt, so führt dies zu einer gesteigerten Saftausbeute, da die Früchte nicht in den oberen Teil des Rührgefäßes 4 gelangen können und so intensiver durch die Messer 110 bearbeitet werden.

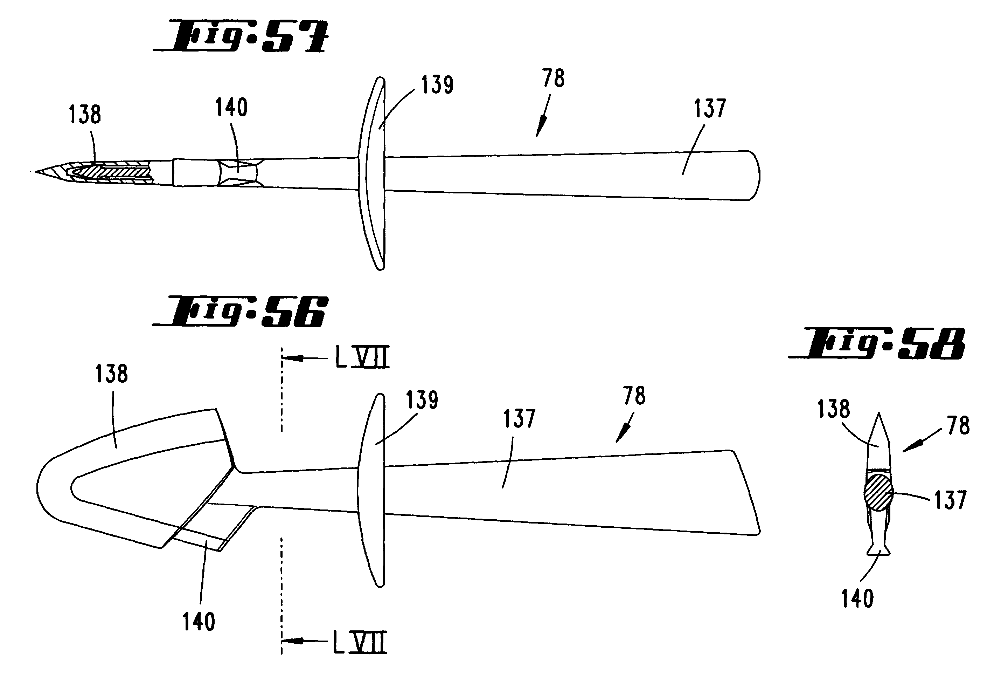

In den Fig. 53 bis 55 sind das Rührgefäß 4, der Gareinsatz 50 und der Rührgefäßdeckel 9 in einer zweiten Ausführungsform jeweils in einer Seitenansicht dargestellt. Hier ist zu erkennen, daß der Rührgefäßdeckel 9 anstelle des im ersten Ausführungsbeispiel angeordneten Verriegelungshakens 16 nunmehr einen Steg 34 aufweist. Dieser Steg 134 ist mit einem Schlitz 135 versehen, in welchen eine Zunge 136 des Rührgefäßes 4 bei aufgesetztem Rührgefäßdeckel 9 eingreift. Die Zunge 136 dient nach abgenommenem Rührgefäßdeckel 9 auch als Ausgießnase.

Der aufgesetzte Rührgefäßdeckel ist somit zweifach gesichert, zum einen durch den Eingriff der Zunge 136 in den Schlitz 135 und zum anderen durch ein Überfangen der Vorsprungshalterung 14 mittels eines U-Schenkels des Handhebels 25 (vergl. hierzu Fig. 39).

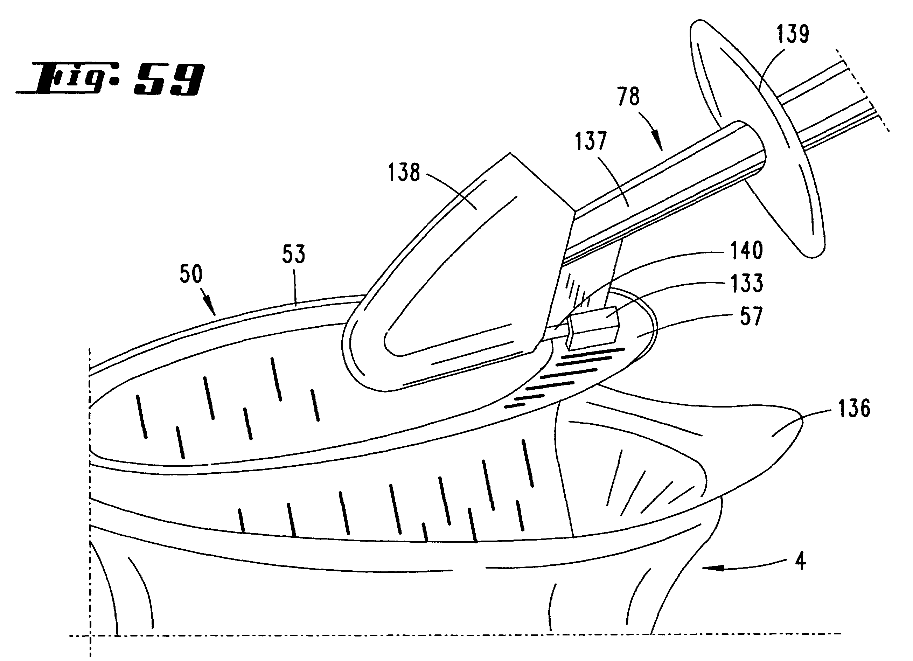

In den Fig. 56 bis 58 ist ein Rührgefäßspachtel 78 in einer zweiten Ausführungsform dargestellt. Letzterer setzt sich im wesentlichen aus einem Spachtelstiel 137 und einem Spachtelbereich 138 zusammen. Spachtelstiel 137 und Spachtelbereich 138 sind gesondert ausgebildet, wobei bevorzugt der Spachtelbereich 138 aus einem weicheren Kunststoff besteht als der Spachtelstiel 137. Der Spachtelbereich 138 ist in Form einer Nut-Federverbindung auf den Spachtelstiel 137 aufgeschoben.

Der Spachtelstiel 137 weist eine schildartige Griffbereichsbegrenzung 139 auf. Weiter besitzt der Rührgefäßspachtel 78 im Bereich des Spachtelbereiches 138 einen schwalbenschwanzförmig gestalteten Entnahmevorsprung 140 zur Zusammenwirkung mit einem Einsatzgefäß, bspw. mit dem Gareinsatz 50.

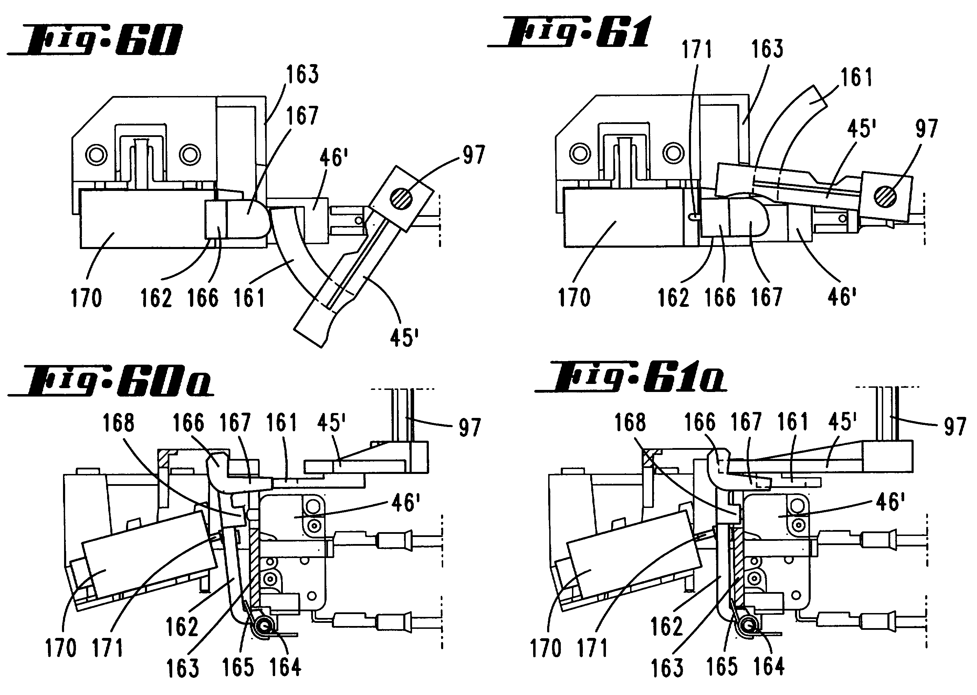

Zur Entnahme des Gareinsatzes 50 aus dem Rührtopf 4 kann nunmehr der Rührgefäßspachtel 78 genutzt werden, indem der schwalbenschwanzförmige Entnahmevorsprung 140 in die ebenfalls schwalbenschwanzförmig ausgebildete Aufnahmeöse 133 eingeschoben wird. Eine derartige Entnahmestellung ist in der Fig. 59 dargestellt. Weiter kann diese Ausgestaltung auch dazu dienen, den Gareinsatz 50 bei einem Entleeren des Rührgefäßes 4 niederzuhalten.

Desweiteren kommt der Rührgefäßspachtel 78 während des Rührbetriebes, insbesondere bei einer Teigherstellung, zum Einsatz. Hierzu wird der Rührgefäßspachtel 78 durch den Rührgefäßdeckel 9 im Bereich seiner Öffnung 10 in den zu rührenden Teig gehalten.

In den Fig. 60 bis 61a ist eine weitere Ausgestaltung der Sicherheitsverriegelung gemäß den Fig. 24 und 25 dargestellt.

Hier ist ebenfalls am unteren Ende der Nockenwelle 97 ein radial nach außen ragender Sicherungshebel 45' angeordnet, welchem in seinem freien Endbereich eine Blockierungskulisse 161 angeformt ist. Letztere ist als Ausleger zu dem Sicherungshebel 45' ausgebildet und weist im Grundriß eine teilringförmige Kontur auf. Wie insbesondere aus der Fig. 60a zu erkennen, ist die Blockierungskulisse 161 an der Unterseite des Sicherungshebels 45' angeformt.

Weiter ist ein hebelartiger Tastschalter 162 vorgesehen, welcher schwenkbeweglich an einer gehäuseseitigen Wand 163 gelagert ist. Die Lagerung erfolgt über einen Drehzapfen 164, auf welchem weiterhin eine Schenkelfeder 165 angeordnet ist. Letztere stützt sich mit ihrem einen Ende an der Gehäusewand 163 und mit ihrem anderen Ende innenseitig an dem Tastschalter 162 ab, womit dieser in eine von dem Sicherungshebel 45' abweisende Richtung federvorgespannt ist.

Der Tastschalter 162 besitzt an seinem freien Ende eine L-förmige Blockierungsschulter 166, wobei ein L-Schenkel 167 in Richtung auf den Sicherungshebel 45' weist. Unterhalb dieser Blockierungsschulter 166 ist ein ebenfalls in Richtung auf den Sicherungshebel 45' weisender Betätigungsvorsprung 168 vorgesehen. Konkret weist dieser Betätigungsvorsprung 168 in Richtung auf einen Sicherheitsschalter 46', welcher ebenfalls an der Wand 163 befestigt ist.

Auf der dem Sicherheitsschalter 46' abgewandten Seite wird der Tastschalter 162 durch einen Stößel 169 eines Elektromagneten 170 abgestützt. Dieser Elektromagnet 170 ist ebenfalls gehäuseseitig befestigt.

In den Fig. 60 und 60a ist eine Grundstellung dargestellt, d. h. eine Stellung, in welcher die Sicherheitseinrichtung noch nicht aktiviert wurde, dies bspw. dann, wenn das Rührgefäß 4 noch nicht in die Aufnahme 3 eingesetzt bzw. der Rührgefäßdeckel 9 noch nicht auf das Rührgefäß 4 aufgesetzt wurde. In dieser Stellung soll verhindert werden, daß der Rührwerkantrieb 2 oder die Heizung aktiviert wird. Dies ist dadurch verhindert, daß der den Sicherheitsschalter 46' zu betätigende Tastschalter 162 in Richtung auf den Sicherheitsschalter 46' blockiert ist. Der L-Schenkel 167 der Blockierungsschulter 166 stützt sich hierbei gegen die Blockierungskulisse 161 ab (vergl. Fig. 60a). Wird in dieser Stellung versucht, den Rührwerkantrieb einzuschalten, so wird der Elektromagnet 170 aktiviert. Der Stößel 171 ist versucht auszufahren und den Tastschalter 162 in Richtung auf den Sicherheitsschalter 46' zu verlagern. Dies wird jedoch, wie bereits erwähnt, durch die Blockierungskulisse 161 verhindert. Es ist somit kein Betrieb des Rührwerkantriebes 2, ohne zuvor das Rührgefäß 4 einzusetzen und dieses mit dem Deckel 9 zu versehen, ermöglicht. Erst nach Betätigung der Sicherungseinrichtung 24 und einem damit einhergehenden Verschwenken des auf der Nockenwelle 97 gelagerten Sicherungshebels 45' in die in den Fig. 61 und 61a dargestellte Stellung kann ein Einschalten des Antriebes 2 erfolgen. Die Blockierungskulisse 161 verläßt den Bereich des Tastschalters 162, womit dieser um den Drehzapfen 164, bedingt durch die rückwärtige Beaufschlagung mittels des Stößels 171, verschwenkt. Diese Verschwenkung bewirkt eine Betätigung des Sicherheitsschalters 46' mittels des Betätigungsvorsprunges 168.

Der Sicherheitsschalter 46' kann bspw. ein Öffner sein, welcher bei Betätigung den Stromkreis zu dem Antrieb 2 schließt. Es ist jedoch auch möglich, einen Sicherheitsschalter 46' vorzusehen, welcher lediglich einen Impuls an eine geräteinterne Elektronik zur Freigabe des Antriebes gibt.

In der verschwenkten Lage des Tastschalters 162 erfolgt auch eine Verriegelung des Sicherungshebels 45' in seiner Sicherungsstellung gemäß Fig. 61. Der Sicherungshebel 45' kann somit mittels der Sicherungseinrichtung bzw. mit der Nockenwelle 97 nur dann wieder in seine Ausgangsposition gebracht werden, wenn der Tastschalters 162 zurückverlagert ist. Die Sperrung des Sicherungshebels 45' erfolgt in diesem Ausführungsbeispiel an zwei Punkten. Zum einen blockiert die Blokkierungsschulter 166 des Tastschalters 162 mit ihrem L-Schenkel 167 den Sicherungshebel 45' im Bereich seiner Blockierungskulisse 161 und zum anderen mit seinem anderen L-Schenkel im Bereich des über die Blockierungskulisse 161 hinausragenden Endbereichs des Sicherungshebels 45'.

Der Tastschalter 162 kann zur Freigabe des Sicherungshebels 45' erst dann in eine Freigabestellung verschwenken, wenn der Elektromagnet 170 abfällt und somit die Schenkelfeder 145 zur Wirkung kommt. Hierzu ist zunächst ein Ausschalten des Antriebes 2 und gegebenenfalls der Heizung erforderlich. Der Elektromagnet 170 fällt jedoch erst nach völligem Stillstand des Messerwerkes 6 ab. Hierzu kann an dem Rührwerkantrieb 2 oder im Bereich des Messerwerks ein Drehzahlabnehmer vorgesehen sein, welcher erst bei völligem Stillstand der Messer die Stromzufuhr zu dem Elektromagneten 170 unterbricht. Der Stößel 169 wird nicht mehr in Richtung auf den Tastschalters 162 bewegt. Die Schenkelfeder 165 bewirkt eine Zurückverlagerung des Tastschalters 162, wobei der Betätigungsvorsprung 168 den Sicherheitsschalter 46' und die Blockierungsschulter 166 den Bereich des Sicherungshebels 45' verläßt. Letzterer ist nunmehr verdrehbar, womit auch eine Aufspreizung der das Rührgefäß 4 haltenden Manschette ermöglicht wird.

Es ist auch eine Ausgestaltung denkbar, bei welcher der Elektromagnet 170 bei einem grundsätzlichen Einschalten der Küchenmaschine 1 stets aktiviert ist und der Tastschalter 162 in einer Grundstellung stets gegen die Blockierungskulisse 161 tritt. Hier ist zum Auflösen der in den Fig. 61 und 61a gezeigten Sicherungsstellung des Sicherungshebels 45' ein vollständiges Ausschalten der Küchenmaschine 1 erforderlich, womit der Elektromagnet 170 zur Freigabe des Tastschalters 162 abfällt.

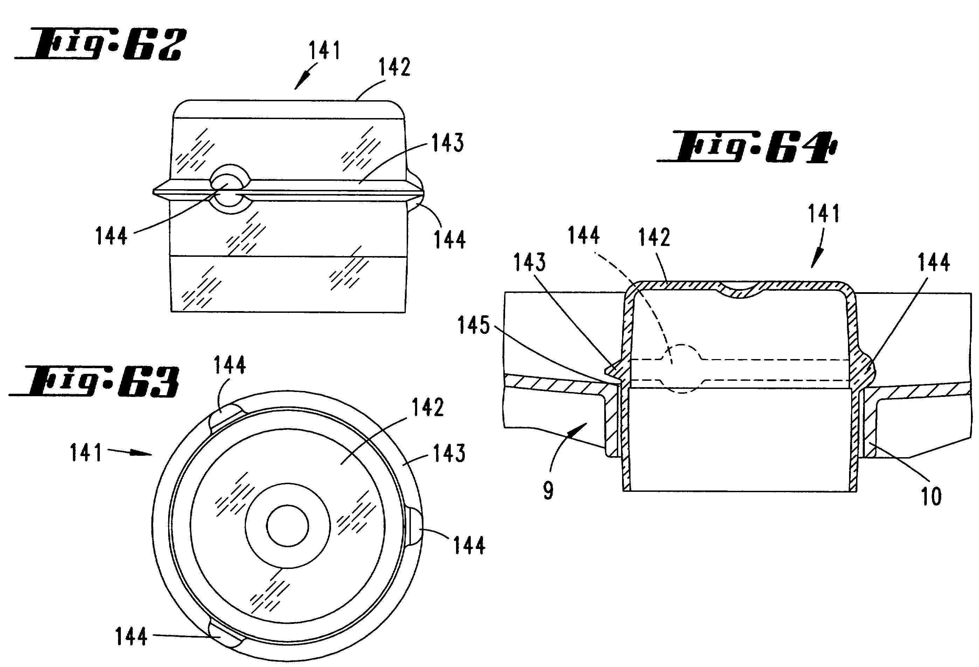

Schließlich ist eine Deckelkrone 141 vorgesehen, welche in den Fig. 62 und 63 dargestellt ist. Diese ist als zylindrischer Hohlkörper ausgebildet und mit einer Decke 142 versehen. Etwa auf halber Höhe ist die Dekkelkrone 141 mantelaußenseitig mit einem Ringkragen 143 versehen, welcher einen etwa dreieckförmigen Querschnitt aufweist. Der Außendurchmesser des Ringkragens 143 ist etwas größer bemessen als der Durchmesser der Öffnung 10 des Rührgefäßdeckels 9. Weiter sind im Bereich des Ringkragens 143 drei gleichmäßig auf dem Umfang verteilte Abstützhöcker 144 vorgesehen, wobei sich jeder Höcker 144 gleichmäßig oberhalb und unterhalb des Ringkragens 143 erstreckt. Die radiale Tiefe eines jeden Abstützhöckers 144 entspricht der des Ringkragens 143.

Die Deckelkrone 141 dient zum Einsatz in die Öffnung 10 des Rührgefäßdeckels 9. Hierbei stützt sich die Deckelkrone 141 im Bereich ihrer Abstützhöcker 144 mittels dieser im Randbereich der Öffnung 10 ab, wodurch ein ringförmiger Schlitz 145 verbleibt, zum Durchtritt von Dampf (vergl. Fig. 64).

Die Deckelkrone 141 ist bevorzugt ein transparentes Kunststoffteil.

## Patentansprüche

1. Küchenmaschine (1) mit einem Rührgefäß (4) und einem Antrieb (2) für ein Rührwerk (6) in dem Rührgefäß (4), wobei weiter ein Rührgefäßdeckel (9) vorgesehen ist und in der Küchenmaschine (1) eine Rührgefäßaufnahme (37) für das Rührgefäß (4) ausgebildet ist, dadurch gekennzeichnet, daß an dem Handgriff (5) des Rührgefäßes (4) eine Drehsicherung (24) ausgebildet ist, welche zugleich eine Sicherung des Rührgefäßes (4) in der Rührgefäßaufnahme (37) und des Rührgefäßdeckels (9) auf dem Rührgefäß (4) ermöglicht.

2. Küchenmaschine nach Anspruch 1, dadurch gekennzeichnet, daß weiter mit der Sicherungseinrichtung (24) ein Sicherungshebel (45, 45') verbunden ist, dessen Bewegung zur Betätigung eines Sicherheitsschalters (46, 46') ausgenutzt ist.

3. Küchenmaschine nach einem oder mehreren der vorhergehenden Ansprüche, dadurch gekennzeichnet, daß ein Tastschalter (162) der Sicherungseinrichtung (24) in Abhängigkeit einer Drehbewegung des Rührwerkantriebes (2) bzw. des Messerwerks (6) in seiner Betätigungsstellung beaufschlagt ist.

4. Küchenmaschine nach einem oder mehreren der vorhergehenden Ansprüche 2 und 3, dadurch gekennzeichnet, daß eine Aktivierung des Rührwerks und gegebenenfalls einer Heizung an die Detektierung einer Bewegung des Sicherungshebels (45, 45') in die Sicherungsstellung gekoppelt ist.

5. Küchenmaschine nach einem oder mehreren der vorhergehenden Ansprüche, dadurch gekennzeichnet, daß ein Gareinsatz (50) vorgesehen ist, der in dem Rührgefäß (4) überfangen von dem Rührgefäßdeckel (9), anordbar ist.

6. Küchenmaschine nach einem oder mehreren der vorhergehenden Ansprüche, wobei ein Rühraufsatz, insbesondere ein Sahnerühraufsatz, vorgesehen ist, dadurch gekennzeichnet, daß der Rühraufsatz eine Steckaufnahme aufweist zur Steckverbindung mit einem Messersatz (6) des Rührwerks.

7. Küchenmaschine nach einem oder mehreren der vorhergehenden Ansprüche, dadurch gekennzeichnet, daß der Messersatz (6) mit einem Messerlager (112) betrieblich nicht lösbar verbunden ist und daß das Messerlager (112) unter Durchsetzung des Rührgefäßbodens (67) an dem Rührgefäß (4) befestigbar ist.

8. Küchenmaschine nach einem oder mehreren der vorhergehenden Ansprüche, gekennzeichnet durch einen Rührgefäßspachtel (78), wobei dieser einen Entnahmevorsprung (140) aufweist zur Zusammenwirkung mit einem Einsatzgefäß (50).

## Claims

1. A food processor (1) having a mixing vessel (4) and a drive (2) for an agitator (6) in the mixing vessel (4), a mixing vessel lid (9) being also provided and a mixing vessel seat (37) for the mixing vessel (4) being provided in the food processor (1), characterised in that a rotary safety device (24) is provided on the handle (5) of the mixing vessel (4), the safety device (24) enabling at the same time securing of the mixing vessel (4) in the mixing vessel seat (37) and of the mixing vessel lid (9) on the mixing vessel (4).

2. A food processor according to Claim 1, characterised in that a securing lever (45, 45') is connected to the safety device (24), movement of the lever being used for actuation of a safety switch (46, 46').

3. A food processor according to one or more of the preceding claims, characterised in that a probe switch (162) of the safety device (24) is acted upon in dependence on a rotational movement of the agitator drive (2) or of the cutter mechanism (6) in the actuation position of the switch.

4. A food processor according to one or more of the preceding Claims 2 and 3, characterised in that actuation of the agitator and optionally actuation of heating is coupled to the detection of a movement of the safety lever (45, 45') into the securing position.

5. A food processor according to one or more of the preceding claims, characterised in that a cooking insert (50) is provided, which can be located in the mixing vessel (4) and gripped over by the mixing vessel lid (9).

6. A food processor according to one or more of the preceding claims, a stirring attachment, in particular a stirring attachment for cream, being provided, characterised in that the stirring attachment has a plug-in seat for plug-in connection with a cutter unit (6) of the agitator.

7. A food processor according to one or more of the preceding claims, characterised in that the cutter unit (6) is operatively connected in a non-releasable manner to a cutter bearing (112) and that the cutter bearing (112) can be secured to the mixing vessel (4) while passing through the base (67) of the mixing vessel.

8. A food processor according to one or more of the preceding claims, characterised by a mixing vessel spatula (78), the spatula having a withdrawal projection (140) for cooperation with an insert vessel (50).

## Revendications

1. Robot de cuisine (1) avec un bac mélangeur (4) et un entraînement (2) pour un mécanisme agitateur (6) se trouvant dans le bac mélangeur (4). un couvercle de bac mélangeur (9) étant par ailleurs prévu et un réceptacle de bac mélangeur (37) pour le bac mélangeur (4) étant réalisé dans le robot de cuisine (1), caractérisé en ce que dans la poignée (5) du bac mélangeur (4) est prévu un dispositif de verrouillage anti-rotation (24) qui permet en même temps un verrouillage du bac mélangeur (4) dans le réceptacle de bac mélangeur (37) et du couvercle de bac mélangeur (9) sur le bac mélangeur (4).

2. Robot de cuisine selon la revendication 1, caractérisé en ce que le dispositif de verrouillage (24) est aussi relié à un levier de verrouillage (45, 45') dont le déplacement est utilisé pour l'actionnement d'un interrupteur de sécurité (46, 46').

3. Robot de cuisine selon l'une ou plusieurs des revendications précédentes, caractérisé en ce qu'un contacteur à poussoir (162) du dispositif de verrouillage (24) est actionné dans sa position d'actionnement en fonction d'un déplacement de rotation de l'entraînement (2) du mécanisme agitateur ou du jeu de couteaux (6).

4. Robot de cuisine selon l'une ou plusieurs des revendications précédentes 2 et 3, caractérisé en ce qu'une activation du mécanisme agitateur et éventuellement d'un chauffage est couplée à la détection d'un déplacement du levier de verrouillage (45, 45') dans la position de verrouillage.

5. Robot de cuisine selon l'une ou plusieurs des revendications précédentes, caractérisé en ce qu'est prévu un insert de cuisson (50) qui est susceptible d'être disposé dans le bac mélangeur (4) en étant recouvert par le couvercle de bac mélangeur (9).

6. Robot de cuisine selon l'une ou plusieurs des revendications précédentes, dans lequel est prévu un batteur rapporté, en particulier un batteur à crème. caractérisé en ce que le batteur rapporté comporte un récepteur d'enfichage pour une liaison d'enfichage avec un jeu de couteaux (6) du mécanisme agitateur.

7. Robot de cuisine selon l'une ou plusieurs des revendications précédentes, caractérisé en ce que le jeu de couteaux (6) est relié de manière non amovible en fonctionnement à un palier support de couteaux (112) et en ce que le palier support de couteaux (112) est susceptible d'être fixé sur le bac mélangeur (4) après avoir traversé le fond (67) du bac mélangeur.

8. Robot de cuisine selon l'une ou plusieurs des revendications précédentes, caractérisé par une spatule (78) de bac mélangeur, celle-ci comprenant une saillie de saisie (140) destinée à coopérer avec un bac d'insertion (50).
